# EUROPÄISCHE PATENTSCHRIFT

(11) **EP 3 769 070 B1**
(45) Veröffentlichungstag und Bekanntmachung des Hinweises auf die Patenterteilung: **29.05.2024**
(21) Anmeldenummer: 19705750.8
(22) Anmeldetag: 14.02.2019
(51) Int. Cl.: G01N 21/31, G01J 3/28, G01N 21/64, G01N 21/65, G01J 3/12, G01J 3/44, G01N 21/47

(54) **SPEKTROMETERVORRICHTUNG, VERFAHREN ZUM BETREIBEN DER VORRICHTUNG UND IHRE VERWENDUNG**
SPECTROMETER DEVICE, METHOD FOR OPERATING THE DEVICE AND USE THEREOF
DISPOSITIF DE SPECTROMÈTRE, SON PROCÉDÉ DE FONCTIONNEMENT ET SON UTILISATION

(30) Priorität: 22.03.2018 DE 102018106819
(43) Veröffentlichungstag der Anmeldung: 27.01.2021
(73) Patentinhaber: Hochschule Mannheim, 68163 Mannheim (DE)
(72) Erfinder: BRAUN, Frank, 69226 Nußloch (DE); HIEN, Andreas, 71332 Waiblingen (DE); RÄDLE, Matthias, 67273 Weisenheim am Berg (DE)
(74) Vertreter: Blumbach · Zinngrebe Patentanwälte PartG mbB
(86) Internationale Anmeldenummer: PCT/EP2019/053729
(87) Internationale Veröffentlichungsnummer: WO 2019/179699

(56) Entgegenhaltungen:
- CN-A- 104 007 069
- CN-Y- 2 598 072
- US-A- 5 004 311
- US-A1- 2004 169 854
- US-A1- 2006 250 613
- US-B1- 6 174 677
- CULLUM B M ET AL: "Field-portable AOTF-based monitor technology for environmental sensing", VISUAL COMMUNICATIONS AND IMAGE PROCESSING; 20-1-2004 - 20-1-2004; SAN JOSE,, Bd. 4577, Januar 2002 (2002-01), Seiten 65-75, XP002290916, DOI: 10.1117/12.455723 ISBN: 978-1-62841-730-2

## Beschreibung

### Gebiet der Erfindung

Die Erfindung betrifft eine Spektrometervorrichtung, insbesondere eine Raman-Spektrometervorrichtung, Fluoreszenz-Spektrometervorrichtung und/oder Absorptions-Spektrometervorrichtung, ein Verfahren zur spektralen Analyse eines Sekundärlicht-Spektrums, insbesondere eines Ramanspektrums, Fluoreszenzspektrums und/oder Absorptionsspektrums, sowie Verwendungen einer solchen Spektrometervorrichtung bzw. des Verfahrens.

### Hintergrund der Erfindung

Raman- und Fluoreszenz-Effekte sind gegenüber anderen optischen Analyseverfahren durch kleine Photonenströme gekennzeichnet. Aus diesem Grund werden konventionelle Raman-Spektrometer mit sehr starken Laserlichtquellen ausgestattet. Hier kommen typisch bis zu 500 mW Laserleistung oder auch mehr zur Anwendung. Detektionsseitig werden häufig höchstempfindliche Zeilendetektoren oder Flächendetektoren (CCD, EMCCD, CMOS, sCMOS) z.B aus dem Wissenschafts- und Astronomiebereich eingesetzt, sowie Detektoren für die zeitaufgelöste Spektroskopie. Diese werden in der Regel zur Reduktion des thermischen Rauschens ein- oder mehrstufig mittels Peltierelementen oder mittels flüssigem Stickstoff gekühlt.

In der klassischen Raman-Spektroskopie werden zur Trennung der verschiedenen Lichtwellenlängen auf simultan messende Elemente (Pixel) örtlich dispersive Elemente eingesetzt. Diese sind dem Fachmann als Transmissionsgitter, Reflexionsgitter oder Prismen, auch in Kombination bekannt und brauchen nicht weiter erläutert werden. Das Grundprinzip liegt darin, dass eine Wellenlängenauflösung mit einer Ortsauflösung korrespondiert, also z.B. ein größerer Eintrittspalt zu einer schlechteren Wellenlängenauflösung führt, also eine Dispersion der Wellenlängen über die Ortskomponente durchgeführt wird. Wegen dieser Gegebenheit können mit diesen Prinzipien typischerweise nur kleine Objekte mit hoher Wellenlängenauflösung spektroskopisch gemessen oder erfasst werden. Die Pixelgrößen der nachweisenden CCD/CMOS-Elemente sind gegeben durch eine Breite von z.B. 20 µm oder 25 µm - oft auch darunter und einer Pixelhöhe von 500 µm manchmal auch etwas darüber. Dennoch kann eine Eintrittsfläche, die zu detektieren ist, nicht wesentlich größer sein als die Fläche der Pixel. In den besten in der Literatur beschriebenen und käuflichen Systemen kommen sogenannte Querschnittswandler zum Einsatz, die einen gewissen technischen Aufwand darstellen. Meist besitzen diese eine rundgeformte Eintrittsöffnung, in der das Licht in das Spektrometer eintritt und auf einen Schlitz geformt wird, der gerade diesen Maßen, z.B. 25 x 500 µm², entspricht. Damit entsprechen runde Eintrittsöffnungen von ca. 100 µm oder 200 µm, in den größten Ausführungsformen mit Pixelgrößen in der Höhe bis 2,5 mm (oft mittels horizontalem Binning) runde Eintrittsöffnungen von 600 µm. Damit können bei vorgegebenem und in der üblichen technischen Ausführung auch nur wenig variierbarem Aperturwinkel nur Objekte von ca. 0,6 mm Durchmesser abgebildet werden. Größere leuchtende Objekte können nur bei nicht vollständiger Ausnutzung einer optimalen Photonenausbeute in das Spektrometer abgebildet werden.

Derartige Systeme sind aufwändig und kostenträchtig, um ausreichende Nachweisempfindlichkeiten zu erzielen. Ferner sind sie unter anderem wegen der hohen Laserleistung häufig nicht in explosionsgeschützten Bereichen einsetzbar (nicht EX-fähig).

US 2004/169854 A1 beschreibt ein durch Abtasten abstimmbares Erfassungssystem und ein Verfahren zum Analysieren von Proben umfassend: Eine Quelle zeitvariabler Anregungssignale und ein abstimmbares optisches Filter zum selektiven Übertragen zeitveränderlicher optischer Signale, die von einer Probe nach Bestrahlung mit den zeitveränderlichen Anregungssignalen ausgehen.

US 6 174 677 B1 betrifft eine Reihe von Verfahren und Systemen zur Verwendung der oberflächenverstärkten Raman (SER) Gensonde zur Hybridisierung, Detektion und Identifizierung von SER markiertem hybridisiertem Ziel-Oligonukleotid-Material.

In D2 wird Laserlicht entweder auf einen teildurchlässigen Spiegel und anschließend durch eine Fokusoptik hindurch auf eine Probe gelenkt, oder das Laserlicht vor dem Spiegel fokussiert und auf die Probe reflektiert, wobei die Probe durchstrahlt wird und das Sekundärlicht hinter der Probe eine Optik passiert.

### Allgemeine Beschreibung der Erfindung

Die Erfindung hat sich daher die Aufgabe gestellt, eine gattungsgemäße Spektrometervorrichtung bzw. ein Spektrometrieverfahren bereit zu stellen, welche einfach und kostengünstig sind und qualitativ hochwertige Ergebnisse liefern.

Eine solche Spektrometervorrichtung bzw. ein solches Spektrometrieverfahren sind zum Einsatz ins explosionsgeschütztes Umgebungen geeignet (EX-fähig).

Ferner sind eine solche Spektrometervorrichtung bzw. ein solches Spektrometrieverfahren für streuende und/oder opake Proben geeignet.

Eine weitere Aufgabe der Erfindung ist es, Verwendungen einer solchen Spektrometervorrichtung bzw. eines solchen Spektrometrieverfahrens bereit zu stellen.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird eine Spektrometervorrichtung, insbesondere zur Raman-, Fluoreszenz-, und/oder Absorptionsspektrometrie bereit gestellt, die in Anspruch 1 definiert ist.

Die Optik ist beispielsweise eine refraktive Optik oder Linsenoptik, z.B. mit einer Sammellinse und einer Zerstreuungslinse, die eine große Fläche der Probe abbilden kann. Die Abbildung erfolgt beispielsweise ohne Wellenlängendispersion mittels eines Spalts, sondern durch spaltfreie Abbildung der Probenoberfläche auf die Nachweisfläche der Detektionseinrichtung. Die Optik ist beispielsweise eine Sammeloptik bzw. koaxiale Ramansonden-Optik. Vorzugsweise kommt das Sekundärlicht, das durch das durchstimmbare optische Filter gelangt, bei entsprechend großer aktiver Nachweisfläche der Detektoreinrichtung ohne weitere optische Abbildung zwischen dem durchstimmbaren optischen Filter und der Detektoreinrichtung auf dieser direkt zum Nachweis. Dadurch kann eine hohe Lichtempfindlichkeit erreicht werden. Vorzugsweise umfasst die Detektoreinrichtung zumindest einen Einzelphotonen-Detektor, also einen Detektor, der in der Lage ist, einzelne Photonen zu detektieren. Vorzugsweise wird also keine örtliche Dispersion der Wellenlängen des Sekundärlichts vorgenommen, sondern das Sekundärlicht einer Wellenlänge wird auf die gesamte aktive Nachweisfläche der Detektoreinrichtung abgebildet. Die Wellenlängendispersion des Sekundärlichts erfolgt zeitlich mittels Durchstimmen des durchstimmbaren optischen Filters.

Zweckmäßig umfasst die Spektrometervorrichtung noch eine Auswerteeinrichtung zur Auswertung der von der Detektoreinrichtung detektierten Wellenlängen des Sekundärlichts, z.B. einen Computer.

Die Spektrometervorrichtung kann z.B. für Raman- und/oder Fluoreszenzanwendungen, für reine Absorptionsanwendungen, aber auch für kombinierte Absorptions- und Raman-/Fluoreszenzanwendungen genutzt werden, um die so erhaltenen Messwerte in einem Algorithmus zu korrigieren. Z.B. kann das Ramansignal aus Streu- und/oder Absorptionseigenschaften der Matrix korrigiert werden. Das gleiche gilt für die Fluoreszenzemission. Die Spektrometervorrichtung eignet sich in der Ramananwendung für Stokes- und Anti-Stokes-Messungen. In vorteilhafter Weise können durch großflächige Detektion auch schwache Signale detektiert werden.

Das durchstimmbare optische Filter ist vorzugsweise ein elektrisch oder elektronisch gesteuert durchstimmbares optisches Bandpassfilter, welches sich auf einen oder simultan mehrere Wellenlängenbereiche erstreckt. Insbesondere ist das durchstimmbare optische Filter mittels elektrischer oder elektronischer Signale ansteuerbar, um eine oder mehrere gewünschte Wellenlängen, oder einen oder mehrere gewünschte Wellenlängenbereiche des Sekundärlichtspektrums auszuwählen, welche von dem optischen Filter durchgelassen wird bzw. werden. Insbesondere wird das durchstimmbare optische Filter nicht durch mechanische Bewegung oder Verkippung eines Bandpassfilters durchgestimmt. Ggf. kann der Nutzer in der Auswerteeinrichtung mehrere Wellenlängen gleichzeitig auswählen, welche auf den gleichen Ort abgebildet werden.

Vorzugsweise ist das durchstimmbare optische Filter mit einer Frequenz im Bereich zwischen 1 Hz und 1 MHz, vorzugsweise mit einer Frequenz im Bereich zwischen 10 Hz und 100 kHz durchstimmbar.

Vorzugsweise ist das durchstimmbare optische Filter ein akusto-optisch stimmbares Filter (AOTF). Es sind allerdings auch Flüssigkristall-stimmbare Bandpassfilter, mittels eines mikro-elektro-mechanischen Systems (MEMS) stimmbare optische Filter oder ein scannendes Fabry-Perot (FP) Interferometer oder Kombinationen solcher durchstimmbaren Filter in Reihe möglich. Ferner kann das durchstimmbare optische Filter mit fixen steilen optischen Filtern, z.B. Edge-, Notch-, Langpass-, Kurzpass-, Bandpass- und/oder Laserlinienfiltern kombiniert werden, um die Wellenlängenauflösung einer Bande oder mehrerer Banden weiter zu steigern.

Z.B. wird zumindest ein Strahl erster Ordnung des optisch durchstimmbaren Filter mittels der Detektoreinrichtung nachgewiesen. Der Strahl nullter Ordnung kann mittels einer Lichtfalle absorbiert bzw. eliminiert werden. Anstelle der Lichtfalle kann jedoch auch ein Detektor für den Strahl nullter Ordnung vorgesehen sein, welcher die elastische Streuung des Primärlichts bzw. den Strahl nullter Ordnung ggf. fortlaufend detektiert.

Das durchstimmbare optische Filter erzeugt beispielsweise zwei Strahlen erster Ordnung. Einer davon ist ortsfest und der andere kann beim Durchstimmen etwas hin- und herspringen. Gemäß einer besonderen Ausführungsform detektiert die Detektoreinrichtung beide Strahlen erster Ordnung.

Die Detektoreinrichtung kann z.B. einen Detektor aufweisen, welcher groß genug ist um den hin- und herspringenden Strahl erster Ordnung trotz des Hin- und Herspringens in jeder Lage zu detektieren. Es kann entweder ein Spiegel umfasst sein, welcher beide Strahlen erster Ordnung auf denselben (großflächigen) Detektor zusammen spiegelt oder die Detektoreinrichtung weist zumindest zwei Detektoren auf und der eine der beide Strahlen erster Ordnung wird von dem einen der beiden Detektoren detektiert und der andere der beiden Strahlen erster Ordnung wird von dem anderen der beiden Detektoren detektiert. Es ist auch möglich, einen der Strahlen erster Ordnung, vorzugsweise den ortsfesten Strahl erster Ordnung, mit einem Beamsplitter aufzusplitten und dann die beiden Strahlteile mit zwei Detektoren zu detektieren, um Redundanz zu erzeugen.

Gemäß einer bevorzugten Ausführungsform umfasst die Lichtquelle einen Laser, einen Multicolorlaser, einen RGB-Laser, einen Weißlichtlaser, eine LED oder eine breitbandige gefilterte Lichtquelle (z.B. eine Halogen-Lichtquelle, eine Deuterium-Lichtquelle etc.). Es kann demnach eine Mehrwellenlängenanregung, z.B. mit dem Multicolorlaser oder RGB-Laser durchgeführt werden. Der Benutzer kann dann z.B. bei hohem Fluoreszenzuntergrund die Wellenlänge des Anregungs- bzw. Primärlichts vergrößern, z.B. von grün auf rot wechseln. Der Benutzer kann allerdings auch fortlaufend seriell mit den drei Wellenlängen des RGB-Lasers anregen. Es können auch Laser verwendet werden, bei welchen der Benutzer die Wellenlänge des Primärlichtstrahls in einem gewissen Bereich frei einstellen kann. Dies ist insbesondere möglich, wenn ein metallischer und kein dichroitischer Spiegel verwendet wird. Es ist dabei vorteilhaft, Laser zu verwenden, die Laserstrahlen verschiedener Wellenlängen auf einer Achse emittieren. Wenn ein Weißlichtlaser verwendet wird, kann dieser mit einem weiteren AOTF für den Primärlichtstrahl im Primärlichtpfad durchgestimmt werden.

Es sind z.B. derzeit folgende Multicolorlaser am Markt verfügbar:
1. Multicolorlaser des Typs TRIUS mit 500 mW bei 532 nm.
   Der TRIUS ist ein RGB-Lasermodul, das sich durch die hohe Leistung von 500 mW und gute Strahlform des 532 nm DPSS Kanals auszeichnet. Mit 1300 mW bei 450 nm und 500 mW bei 638 nm erreicht das Modul eine Gesamtleistung von 2300 mW Multiline.
2. Multicolorlaser des Typs TIGER

Der TIGER ist ein RGB-Lasermodul mit 1300 mW bei 450 nm, 700 mW bei 520 nm und 1000 mW bei 638 nm. Über eine externe analoge Modulation können die Wellenlängenkanäle unabhängig voneinander von null bis 100 % moduliert werden.

Mit einem Multicolorlaser kann gleichzeitig auf einen örtlichen Kanal mit mehreren, z.B. 2, 3 oder mehr Wellenlängen Primärlicht gepumpt und in 2, 3 oder mehr Bereichen eine Ramananregung durchgeführt werden. Dann können 2, 3 oder mehr Filter, z.B. Notch-Filter nachgeschaltet werden und es können alle Signale geerntet werden.

Vorzugsweise wird die Probe mit einer Primär-Lichtleistung von kleiner oder gleich 35 mW, vorzugsweise kleiner oder gleich 10 mW, vorzugsweise kleiner oder gleich 5 mW, insbesondere im Bereich von etwa 2 mW oder etwa 1 mW bestrahlt. Dies hat den Vorteil, dass die Spektrometervorrichtung in explosionsgefährdeten Bereichen verwendet kann. Die Spektrometervorrichtung erfüllt insbesondere die ATEX-Richtlinien und/oder den National Electrical Code (NEC), d.h. ist EX-fähig.

Gemäß einer bevorzugten Ausführungsform umfasst die Lichtquelle einen Laser mit zumindest zwei Laserdioden, um eine Zwei-Wellenlängenanregung zur Fluoreszenzunterdrückung durchzuführen. Dabei sind die beiden Wellenlängen nur geringfügig gegeneinander verschoben. Z.B. sind die Wellenlängen um maximal einen Nanometer, vorzugsweise um maximal einige Zehntel Nanometer unterschiedlich. D.h. es kann eine dem Fachmann grundsätzlich bekannte Primärlicht-Fluoreszenzkompensation mittels der beiden Laserdioden mit leicht streuender Anregungswellenlänge auf einer Achse durchgeführt werden. Es können z.B. eine Laserdiode mit 785 nm und eine weitere Laserdiode mit etwa 785,1 nm bis 785,2 nm zur Raman-Anregung verwendet werden.

Die typische Lebensdauer einer Laserdiode kann bei etwa 8000 h liegen. Die Lichtquelle kann daher einen redundanten Laser mit zumindest zwei Laserdioden umfassen, um bei einem Ausfall einer der beiden Laserdioden automatisch von der einen auf die andere der beiden Laserdioden umzuschalten. So ist die Spektrometervorrichtung in vorteilhafter Weise ausfallsicher und bleibt auch beim Ausfall einer Laserdiode mit der zweiten Laserdiode betriebsbereit und der Laser kann bei Gelegenheit ausgetauscht werden. Dadurch kann ein Nutzungsausfall vermieden werden.

Demnach ist das das Primärlicht als ein Primärlicht-Strahl ausgebildet. Der Durchmesser des Primärlicht-Strahls kann z.B. von einigen hundert Mikrometern bis zu einigen Millimetern betragen, ist also vorzugsweise kleiner oder gleich 5 mm. Insbesondere wird der Primärlicht-Strahl lediglich kollimiert und/oder nicht auf die Probenoberfläche fokussiert. Das hat den Vorteil, dass die EX-Fähigkeit des Systems erhalten bleibt. Die Spektrometervorrichtung eignet sich demnach bei Verwendung eines EX-Lasers ohne Fokussierung für Prozessanalytik in explosionsgefährdeten Bereichen. Die Beleuchtung ist dabei also so ausgelegt, dass es nicht zur Zündung explosiver Gemische kommen kann. Bislang ist dies allenfalls mit sehr hochpreisigen Lasern mit speziellen Schutzbeschaltungen möglich, wobei die Laser im Bereich von 25.000,-Euro liegen können. Mit der vorliegenden Erfindung ist die Verwendung einfacher Laser möglich, welche erheblich kostengünstiger sein können (z.B. unter 1.000,- Euro). Dies ist insbesondere möglich, wenn die optische Anregungsleistung erheblich unter 10 mW liegt, was ausreichende Sicherheitsreserven gewährleistet.

Ferner kann die Lichtquelle einen nicht-wellenlängenstabilisierten und/oder einen nichtintensitätsstabilisierten Laser zur Erzeugung des Primärlicht-Strahls umfassen. In vorteilhafter Weise sind solche Laser einfach und kostengünstig zu erhalten.

Nach der Erfindung ist ein Primärlichtspiegel umfasst, mittels welchem das Primärlicht eingespiegelt wird, um auf die zu untersuchende Probe gerichtet zu werden. Dadurch kann die Lichtquelle, z.B. der Laser quer zum optischen Pfad angeordnet sein.

Dabei kann der Primärlichtspiegel derart im Strahlengang des Sekundärlichts von der Probe angeordnet sein, dass der Primärlichtspiegel als Blende für Reflexionen des Primärlichts von der Probenoberfläche wirkt. Mit anderen Worten kann der Primärlichtspiegel direkte Reflexe von der Probe vor einem Eintritt in die Optik blockieren. Zudem kann sich der Primärlichtspiegel beim Messen durch optische Fenster die vor einer Frontlinse der Optik sitzen, positiv auswirken, indem der Primärlichtspiegel zumindest teilweise Sekundärlicht eliminiert, welches z.B. von einem solchen Fenster emittiert werden kann (störendes Glassignal).

Gemäß einer besonderen Ausführungsform kann der Primärlichtspiegel längs der optischen Achse der Primärlichteinstrahlung verschiebbar angeordnet sein.

Nach der Erfindung ist der Primärlichtspiegel ein einfacher metallischer Spiegel und insbesondere kein dichroitischer Spiegel. Durch den Einsatz eines nicht dichroitischen Spiegels ist dieser wellenlängenunabhängig einsetzbar. Dies bedeutet Vorteile beim universellen Einsatz der Spektrometervorrichtung bzw. Sonde. Die Spektrometervorrichtung kann damit universell für alle Wellenlängen, die ein metallischer Spiegel reflektiert, eingesetzt werden. Damit ist der Spiegel z.B. kombinierbar mit einer Mehrwellenanregung bzw. Fluoreszenzunterdrückung.

Der Primärlichtspiegel kann zwischen der Probe und den optischen Elementen der Optik angeordnet sein. Oder es ist zumindest ein optisches Element, z.B. die Frontlinse der Optik zwischen dem Primärlichtspiegel und der Probe angeordnet. In letzterem Fall weist dieses optische Element zwischen dem Primärlichtspiegel und der Probe eine Bohrung auf, um das Primärlicht durch die Bohrung auf die Probe durchzulassen. In der Bohrung kann ggf. ein nicht-strahlformendes Raman-aktives Fenster (z.B. ein Saphir- oder Diamantfenster) angeordnet sein. Das Signal des Raman-aktiven Fensters kann dann als ein direktes Maß der Laserintensität ausgewertet werden. Mit anderen Worten kann die Laserintensität mit diesem Raman-Signal normiert werden, wenn dieses Ramansignal z.B. mitgeloggt wird.

Gemäß einer bevorzugten Ausführungsform ist der Primärlichtspiegel zum Einkoppeln des Primärlichts, insbesondere wenn dieser zwischen der Frontlinse und der Probe angeordnet ist, quer zur Frontlinse oder parallel zum Strahlengang verfahrbar. Hierdurch ist es möglich, die Blendenwirkung des Primärlichtspiegels zu verstellen. Wenn der Benutzer den Primärlichtspiegel näher an die Probe heranfährt, wird nur ein äußerer Ring der Probe abgebildet, wodurch ein kleiner DOF-Wert (depth of field, Schärfentiefe) erreicht werden kann. Wenn der Benutzer den Primärlichtspiegel von der Probe wegfährt, wird die nachweisbare Photonenintensität erhöht. Das Verfahrsystem kann z.B. mittels eines Gewindes in der Frontlinse angebracht sein. Die Anordnung wirkt ähnlich einer Konfocaloptik. In vorteilhafter Weise sind hiermit im 3D- und 2D-Scanning kleine Messvolumina detektierbar.

Vorzugsweise ist ein Blocking-Filter zur Erhöhung der Unterdrückung des Primärlichts umfasst, welcher die Wellenlänge des Primärlichtes und/oder Reflexionen hiervon blockiert. Vorzugsweise weist das Blocking-Filter eine optische Dichte von mindestens 4 (OD4), vorzugsweise von mindestens 6 (OD6), vorzugsweise von mindestens 8 (OD8) oder mehr auf. Das bedeutet, dass die Wellenlänge des Primärlichts von dem Blocking-Filter um mindestens 4, 6, 8 oder mehr Größenordnungen unterdrückt wird, wohingegen andere Wellenlängen wie insbesondere die des zu detektierenden Sekundärlichts nicht oder nur geringfügig abgeschwächt werden.

Das Blocking-Filter ist vorzugsweise im kollimierten Teil vor dem durchstimmbaren Filter oder vor dem oder den Detektoren angeordnet. Es ist auch möglich, Blocking-Filter an beiden Stellen, d.h. vor dem durchstimmbaren Filter und vor dem oder den Detektoren, also in Reihe, anzuordnen, um die Primärlichtunterdrückung zu erhöhen.

Das Primärlicht lässt sich insbesondere mit einer Kombination aus der Anordnung des Primärlichtspiegels im Strahlengang (Wirkung des Primärlichtspiegels als Blende für Reflexionen des Primärstrahls) und dem nachgeschalten (strahlabwärts bezogen auf das Sekundärlicht) Blocking Filter hinreichend stark unterdrücken, um ein gutes Signal-zu-Untergrund-Verhältnis zu erzielen.

Die Detektoreinrichtung kann z.B. zumindest einen oder mehrere Detektoren aus der folgenden Gruppe umfassen:
- Fotodiode,
- Einzelphotonennachweisdetektor,
- Sekundärelektronenvervielfacher,
- Bildverstärker,
- Photomultiplier,
- customized Photomultiplier,
- Avalanche-Photodiode,
- Multipixel Photonenzähler (MPPC),
- Kamera mit oder ohne vorgeschalteten Bildverstärker.

In vorteilhafter Weise umfasst die Detektoreinrichtung zumindest einen Detektor mit großer aktiver Nachweisfläche. Wenn ein opakes Medium mit Primärlicht angeregt wird, entsteht ein räumlich ausgedehnter Emissionsbereich, d.h. kein kleiner leuchtender Punkt, der Sekundärlicht erzeugt bzw. emittiert, sondern eine große Emissionswolke (ggf. sogar mehrere Wolken), die eine Größe im Zentimeterbereich aufweisen können. Demnach ist der Emissionsbereich der Probe, welcher unter der Bestrahlung der Probe mit dem Primärlicht das Sekundärlicht-Spektrum emittiert, ein räumlich ausgedehnter Emissionsbereich, dessen Ausdehnung erheblich größer ist, als der Durchmesser des Primärlichtstrahls. Ferner ist der Detektor vorzugsweise ein zweidimensionaler Detektor mit einer zweidimensional ausgedehnten aktiven Nachweisfläche und die Optik bildet zumindest einen Teil des räumlich ausgedehnten Emissionsbereichs der Probe, der erheblich größer ist als der Durchmesser des Primärstrahls auf die große aktive Nachweisfläche des Detektors ab. Dadurch kann eine hohe Empfindlichkeit bei gleichzeitig geringer Laserleistung erzielt werden. Der bzw. die Detektoren können ungekühlt sein.

Insbesondere weist die aktive Nachweisfläche des Detektors eine Flächengröße D auf und die Optik bildet zumindest einen Teil des Emissionsbereichs der Probe auf den Detektor ab und der abgebildete Teil des Emissionsbereich der Probe weist eine Flächengröße T quer zu dem eingestrahlten Primärlicht auf. Vorzugsweise beträgt die Flächengröße D der aktiven Nachweisfläche, auf welche die Optik den Teil mit der Flächengröße T des Emissionsbereichs abbildet, eine Flächengröße von größer oder gleich 1 mm², insbesondere größer oder gleich 10 mm², insbesondere größer oder gleich 100 mm². Es sind sogar Detektoren mit einer Flächengröße T von etwa 400 mm² einsetzbar. Ferner vorzugsweise beträgt nun die Flächengröße T des von der Optik auf die große aktive Nachweisfläche des Detektors abgebildeten Teils des Emissionsbereichs größer oder gleich 1 mm², insbesondere größer oder gleich 10 mm², also einen großen Teil der Emissionswolke, bei manchen Anwendungen sogar die gesamte Emissionswolke. Das Sekundärlicht wird vorzugsweise mit refraktiven Elementen, wie z.B. Linsen auf die Detektoreinrichtung bzw. den Detektor abgebildet, insbesondere brauchen nicht notwendigerweise Lichtwellenleiter zur Abbildung des Sekundärlichts verwendet werden. Mit anderen Worten kann insbesondere das Sekundärlicht mit einer AOTF-Detektoreinrichtung mit einem großen Detektor detektiert werden ohne dass Lichtwellenleiter zwingend notwendig sind. Für bestimmte Ausführungsformen soll die Verwendung von Lichtwellenleitern jedoch nicht gänzlich ausgeschlossen sein, um z.B. den Sondenkopf von dem Nachweisteil des Spektrometers räumlich zu trennen. Z.B. kann am Eingang des Faserbündels ein Blocking-Filter vorgesehen und die Detektoreinrichtung mittels eines Faserbündels abgetrennt sein.

Mit anderen Worten wird das aus dem im Millimeter- oder Zentimeterbereich flächig oder räumlich ausgedehnten Emissionsbereich emittierte Sekundärlicht mittels der Optik zumindest teilweise auf die im Millimeter- oder Zentimeterbereich zweidimensional ausgedehnte aktive Nachweisfläche der Detektoreinrichtung abgebildet, um dort gleichzeitig detektiert zu werden.

Das von der Probe emittierte Sekundärlicht kann ferner vor dem Detektor, insbesondere vor dem durchstimmbaren Filter parallelisiert werden, um geeignete Abbildungseigenschaften zu erzielen.

Die Spektrometervorrichtung eignet sich für eine Vielzahl von Anwendungen in der Messtechnik, Prozessanalytik, Medizintechnik, Biologie etc.

Vorzugsweise detektiert der Detektor an jedem Punkt seiner Nachweisfläche zu einem bestimmten Zeitpunkt die gleichen Wellenlängen oder simultan mehrere Wellenlängen des Sekundärlichts, d.h. dass die Dispersion des Sekundärlichts nach Wellenlängen nicht örtlich, sondern zeitlich mittels Durchstimmen des durchstimmbaren optischen Filters erfolgt.

Mit anderen Worten werden unterschiedliche Wellenlängen des Sekundärlichts in dem zu detektierenden Wellenlängenintervall des Sekundärlichts zu unterschiedlichen Zeiten detektiert.

Die Detektoreinrichtung ist insbesondere dazu ausgebildet, Sekundärlicht im ultravioletten Bereich (UV), im sichtbaren Bereich (VIS), im Nah-Infrarot-Bereich (NIR) und/oder im Mittel-Infrarot-Bereich (MIR) zu detektieren und zwar vorzugsweise in einem Intervall von 400 bis 11000 nm, vorzugsweise in einem Intervall von 400 bis 900 nm, vorzugsweise in einem Intervall von 400 bis 800 nm.

Gemäß einer besonderen Ausführungsform umfasst die Detektoreinrichtung zumindest einen zeitauflösenden Detektor und das Primärlicht wird gepulst auf oder in die Probe eingestrahlt. Ferner wird das Sekundärlicht mit dem zeitauflösenden Detektor zeitaufgelöst detektiert und koinzident mit der Pulsung des Primärlichtes ausgewertet. Dadurch kann eine effiziente Untergrundunterdrückung bewerkstelligt werden.

Das durchstimmbare Filter kann einen hyperspektralen akusto-optischen Filter (AOTF) umfassen, so dass gleichzeitig mehrere unterschiedliche Wellenlängen des Sekundärlichts auf den Detektor abgebildet werden und mittels der Ortsauflösung des Detektors separat ausgewertet werden können.

Es kann vorteilhaft sein, wenn die Detektoreinrichtung einen schnellen ort- und zeitauflösenden (Einzelphotonen-)Detektor, z.B. einen MCP-Detektor mit orts- und zeitauflösender Anode, z.B. einer Delay-Line-Anode umfasst. Insbesondere in Kombination mit einem hyperspektralen AOTF kann das Primarlicht in Form einer Linie auf die Probe eingestrahlt werden. Hierbei ist es möglich, die Probe in einer Achse mittels eines Linearsystems zu verfahren oder bei einem solchen Detektor kann entweder die Probe oder die Linienanregung gedreht werden. Hierbei reicht ein Schwenk der Linie um 180 Grad aus, um eine kreisrunde Abbildung zu erzeugen. Dreht man mehrfach, kann man Akkumulieren, was zu einem besseren Signal-zu-Rausch-Verhältnis führen kann. Es ist auch denkbar, das Drehen gleichzeitige Verfahren in mehreren Achse zu kombinieren, um schnell mehr Fläche zu generieren.

Ferner kann Multiplexing eingesetzt werden, z.B. kann bei hyperspektraler Ramanerfassung eine Vielzahl von Sonden (z.B. 20) angeschlossen werden, anstatt nur eine Linie zu beleuchten. Es können z.B. an die Stelle der Scanlinie mehrere Detektionsfasern verschiedener Orte angeordnet werden.

Vorzugsweise ist eine Sonde umfasst, aus welcher das Primärlicht emittiert wird, um das Primärlicht auf oder in die zu untersuchende Probe zu strahlen bzw. einzukoppeln. Die Sonde empfängt dann wiederum das Sekundärlicht, um das Sekundärlicht mittels der Optik und dem durchstimmbaren optischen Filter der Detektoreinrichtung zuzuführen. Besonders vorteilhaft ist nun, wenn zumindest die Optik, das optische Filter und die Detektoreinrichtung und vorzugsweise noch die Lichtquelle, das Blocking-Filter und/oder die Auswerteeinrichtung in die Sonde integriert sind. Die Sonde kann als eine nicht-invasive Prozesssonde zur Inline-Ramananalyse bzw. als eine Immersionssonde ausgebildet sein.

Ferner kann die Sonde ein EX-Gehäuse (Explosionsschutz-zugelassenes Gehäuse) umfassen, welches z.B. wie der Laser die ATEX-Richtlinien bzw. die NEC erfüllt. Das hat den Vorteil, dass die gesamte Sonde z.B. ATEX und/oder NEC zertifiziert werden und in EX-Bereichen verwendet werden kann, also EX-fähig sein kann.

Ein Implementieren der Sonde, Elektronik, des Detektorsystems, des durchstimmbaren Filters, insbesondere AOTFs, in ein EX-Gehäuse kann das Verlegen von Lichtwellenleitern, ggf. bis zu 100 m bis zum nächsten nicht EX-geschützten Bereich einsparen. Dadurch kann eine hohe Stabilität des Systems erreicht werden und Messfehler durch Fasereinflüsse können vermieden werden.

Gemäß einer Ausführungsform umfasst die Spektrometervorrichtung einen Facettenspiegel und die Lichtquelle umfasst mehrere, insbesondere EX-zertifizierte Laser. Die Laserstrahlen der mehreren EX-Laser wird mittels des Facettenspiegels zur Bestrahlung der Probe eingekoppelt. Damit kann ein großes Gebiet der Probe gleichzeitig bestrahlt und das Messsignal erhöht werden. Trotzdem können die EX-Richtlinien eingehalten werden, insbesondere wenn die Laserstrahlen nicht fokussiert werden. Bei entsprechend großer aktiver Nachweisfläche des Detektors kann das Sekundärlicht der mehreren Laser auf demselben Detektor, insbesondere gleichzeitig, detektiert werden. Es kann z.B. ein Primärlichtspiegel als Volumenkörper verwendet werden, der mit 45°-Facetten ausgestattet ist, über die mehrere, z.B. 2, 3, 4, 8 oder 16 Laser eingestrahlt bzw. eingekoppelt werden und das Sekundärlicht von zumindest einigen, vorzugsweise allen Laserstrahlen kann gleichzeitig mit demselben Detektor detektiert werden. Es ist auch denkbar, getaktet zu arbeiten, um Sekundärlicht mehrerer Anregungswellenlängen, z.B. rot und grün, gleichzeitig zu detektieren.

Die Erfindung betrifft ferner ein Verfahren zur spektralen Analyse eines Sekundärlicht-Spektrums, welches von einer zu untersuchenden Probe emittiert wird, das in Anspruch 10 definert ist.

Vorzugsweise werden die nachzuweisenden Sekundärlichtwellenlängen durchgescannt, indem das durchstimmbare Filter bzw. der AOTF durchgestimmt wird. Mit anderen Worten werden die Schritte h) und i) in einer Vielzahl von weiteren Sekundärlichtwellenlängen-Intervallen innerhalb eines zu untersuchenden Wellenlängen-Intervalls des Sekundärlicht-Spektrums nacheinander durchgeführt, indem das durchstimmbare optische Filter in einem zeitlichen Messintervall über das zu untersuchende Wellenlängen-Intervall des Sekundärlichtspektrums durchgestimmt wird. Daraus kann dann mit der Auswerteeinrichtung ein Nachweisspektrums des Sekundärlichts über das zu untersuchende Wellenlängen-Intervall erzeugt werden.

In vorteilhafter Weise kann das durchstimmbare optische Filter, bzw. der AOTF mit einer Frequenz im Bereich zwischen 1 Hz und 1 MHz, vorzugsweise mit einer Frequenz im Bereich zwischen 10 Hz und 100 kHz, vorzugsweise mit einer Frequenz im Bereich zwischen 100 Hz und 1 kHz durchgestimmt werden.

Die Probe kann dabei mit einer geringen Lichtleistung des Primärlichtstrahls von kleiner oder gleich 35 mW, vorzugsweise kleiner oder gleich 10 mW, vorzugsweise kleiner oder gleich 5 mW, z.B. im Bereich von 2 mW oder sogar im Bereich von 1 mW bestrahlt werden. Bei Abbildung eines hinreichend großen Emissionsbereichs auf eine hinreichend große Detektorfläche kann trotzdem ein ausreichendes Signal generiert werden.

Damit eignen sich die vorgestellte Spektrometervorrichtung und das vorgestellte Verfahren besonders zur Untersuchung von streuenden bzw. opaken Proben, welche einen räumlich ausgedehnten Emissionsbereich des Sekundärlichts erzeugen, dessen Ausdehnung quer zu dem eingestrahlten Primärlichtstrahl erheblich größer ist als die Querschnittsfläche des Primärlichtstrahls. Hierbei wird zumindest ein Teil, vorzugsweise ein möglichst großer Teil, des Emissionsbereichs von der Optik auf die Detektoreinrichtung abgebildet und das Sekundärlicht aus diesem Teil gleichzeitig detektiert. Insbesondere ist die Ausdehnung quer zu dem eingestrahlten Primärlichtstrahl dieses abgebildeten und gleichzeitig detektierten Teils des Emissionsbereichs ebenfalls erheblich größer als die Querschnittsfläche des Primärlichtstrahls. Mit anderen Worten wird nicht nur der kleine Fleck des Primärstrahls, sondern ein erheblich größerer Bereich der Sekundärlichtemission mit der Linsenoptik auf die Detektoreinrichtung abgebildet.

Die Erfindung eignet sich insbesondere zur transkutanen Untersuchung von menschlicher oder tierischer Haut, insbesondere in vivo, in vitro oder ex vivo.

Die Erfindung eignet sich ferner insbesondere zur Bestimmung von Lactatwerten, Harnstoffwerten, Nierenfunktionswerten, Tumorwerten, Collagenwerten, des Feuchtegehalts oder zur Diagnose von Pigmentveränderungen oder Hautkrebs.

Versuche haben gezeigt, dass bei herkömmlichen faseroptischen Ramansonden die Effizienz zwar mit größeren Faserdurchmessern (z.B. bis 600 µm) gesteigert werden kann, dieser Photonengewinn aber durch einen größeren Spektrometereintrittsspalt mit einer Verschlechterung an optischer Auflösung einhergeht. Dieses Problem kann mit der vorliegenden Erfindung vermieden werden, da mit einem durchstimmbaren Filter, insbesondere mit einem AOTF mindestens 1 mm², vorzugsweise mindestens 5 mm², ggf. sogar 10 mm² oder mehr an Durchtrittsfläche umgesetzt werden kann. Der relevante Wellenlängenbereich kann in gleicher Größe auf den Detektor abgebildet werden, wobei dies ggf. sogar ohne wesentliche Fokussierung möglich ist, wodurch weniger Verluste entstehen. Dies ermöglicht eine hohe Nachweisempfindlichkeit insbesondere in opaken Medien.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind.

Im Folgenden bezieht sich der Begriff "Ausführungsform" nicht notwendigerweise auf eine Ausführungsform der Erfindung, sondern kann sich auf Beispiele beziehen, die für das Verständnis der Erfindung hilfreich sind. Die Erfindung wird durch die angehängten Ansprüche definiert. Kurzbeschreibung der Figuren

Es zeigen:
- Fig. 1: eine schematische Darstellung einer Ausführungsform der erfindungsgemäßen Spektrometervorrichtung,
- Fig. 2: eine schematische Darstellung eines herkömmlichen Ramanspektrometers,
- Fig. 3: eine schematische Darstellung einer weiteren Ausführungsform der erfindungsgemäßen Spektrometervorrichtung mit drei Detektoren,
- Fig. 4: ein Detail einer Abwandlung der erfindungsgemäßen Spektrometervorrichtung,
- Fig. 5: eine schematische Darstellung einer weiteren Ausführungsform der erfindungsgemäßen Spektrometervorrichtung mit drei Detektoren,
- Fig. 6: eine schematische Darstellung einer weiteren Ausführungsform der erfindungsgemäßen Spektrometervorrichtung mit zwei Detektoren,
- Fig. 7: eine schematische Darstellung einer weiteren Ausführungsform der erfindungsgemäßen Spektrometervorrichtung,
- Fig. 8: eine schematische Darstellung einer weiteren Ausführungsform der erfindungsgemäßen Spektrometervorrichtung,
- Fig. 9: eine schematische Darstellung einer weiteren Ausführungsform der erfindungsgemäßen Spektrometervorrichtung,
- Fig. 10: eine schematische Darstellung eines Reaktors mit einer weiteren Ausführungsform der erfindungsgemäßen Spektrometervorrichtung mit Sonde,
- Fig. 11: eine Abwandlung der Ausführungsform in Fig. 10,
- Fig. 12: eine schematische Darstellung eines Reaktors mit einer weiteren Ausführungsform der erfindungsgemäßen Spektrometervorrichtung mit Sonde,
- Fig. 13: eine Abwandlung der Ausführungsform in Fig. 12,
- Fig. 14: eine schematische Darstellung eines Mikroskops mit integrierter Spektrometervorrichtung gemäß einer Ausführungsform der Erfindung,
- Fig. 15: eine schematische Darstellung einer weiteren Ausführungsform der erfindungsgemäßen Spektrometervorrichtung mit zwei Lasern,
- Fig. 16: eine schematische Darstellung einer weiteren Ausführungsform der Erfindung mit einem Sondenkopf,
- Fig. 17: eine weitere Ausführungsform der Erfindung mit Faserankopplung.

### Detaillierte Beschreibung der Erfindung

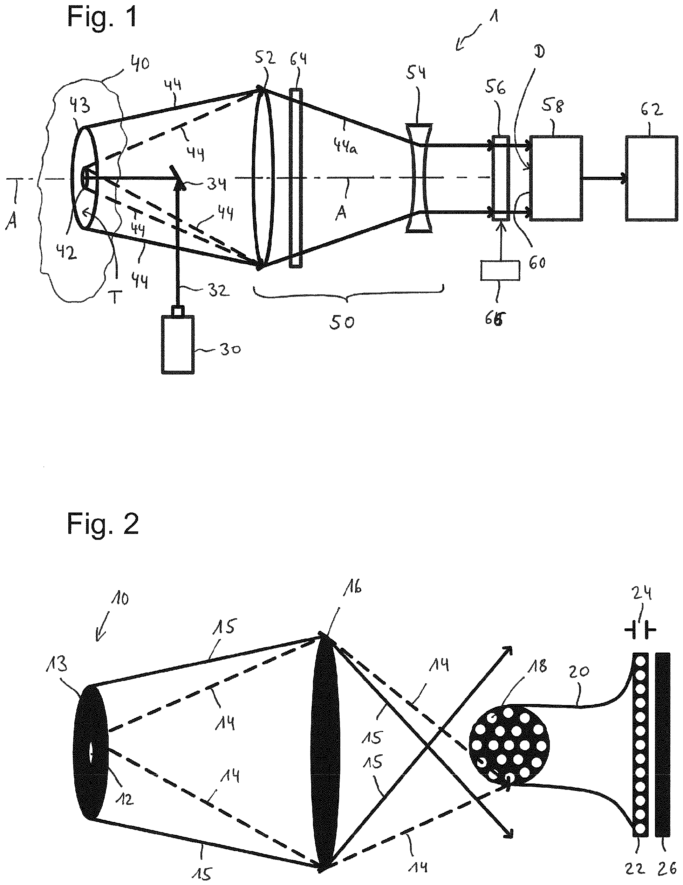

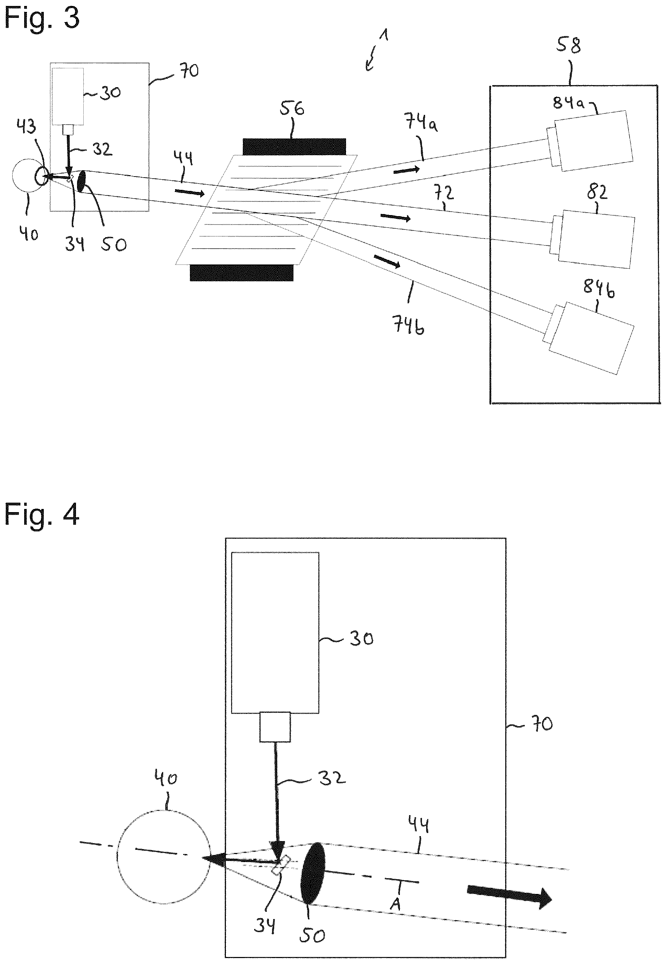

Bezug nehmend auf Fig. 1 wird in dem hier vorgeschlagenen Aufbau ein wellenlängenselektives Element in Form eines durchstimmbaren optischen Filters 56 eingesetzt, beispielsweise ein acousto optical tunable filter (AOTF), Liquid Crystal Tunable Bandpass Filter, MEMS Tunable Optical Filter oder Scanning Fabry-Perot (FP) Interferometer. Dieses durchstimmbare optische Filter 56, beispielsweise AOTF oder ein anderes der zuvor genannten Filter, einschließlich des Interferometers wird elektrisch von einer Steuereinrichtung 66 angesteuert und besitzt keine mechanisch beweglichen Elemente. Z.B. gelangt das von der Probe 40 gestreute Raman-Licht (Stokes- und/oder Anti-Stokes) durch eine einfache Optik 50 und durch das durchstimmbare optische Filter 56, die einen Durchmesser von vorzugsweise zwischen 2 mm und 30 mm, z.B. etwa 8 mm aufweisen. Das Sekundärlicht 44 wird nach dem durchstimmbaren optischen Filter 56 auf eine Detektoreinrichtung 58 geleitet. In der beispielhaften Anordnung umfasst die Detektoreinrichtung 58 zumindest einen Detektor 84, 84a, 84b (vgl. Fig. 3, 5-9) jeweils mit einer großflächigen aktiven Nachweisfläche, auf welcher die Detektoren 84, 84a, 84b Einzelphotonen nachweisen können. Es handelt sich demnach vorzugsweise um einen sogenannten Einzelphotonen-Detektor 84, 84a, 84b. Hier können klassische Photomultiplier, bevorzugt jedoch sogenannte CPMs (Customized Photomultiplier), APDs (Avalanche Photodioden), MPPCs (Multipixel P Photon Counter) aber auch zweidimensionale flächige Detektoren wie Kameras mit und ohne vorgeschaltete Bildverstärker können zum Einsatz kommen. Diese Photomultiplier weisen große Aperturöffnungen im Durchmesser bis zu 10 mm oder auch darüber auf. Damit kann der gesamte Lichtstrahl der zuvor durch eine Sammeloptik (z.B. koaxiale Ramansondenoptik, 90° Anordnungen, 180° Anordnungen, TIR), der durch das AOTF 56 gelangt, bei entsprechend großer Fläche, ohne weitere Abbildung direkt zum Nachweis kommen und die theoretisch maximale Lichtempfindlichkeit erreichen. Das thermische Dunkelrauschen solcher Einzelphotonen-Detektoren 84, 84a, 84b liegt im Bereich von wenigen Ereignissen (Counts) pro Sekunde, so dass die Spektrometervorrichtung 1 bei einem Photonenstrom von wenigen 10⁻¹⁹ A noch über der Nachweisgrenze liegt. Ein besonderer Vorteil der Anordnung liegt darin, dass nicht nur punktförmiges Licht, sondern auch aus einem flächig oder räumlich ausgedehnten Emissionsbereich 43 emittiertes Sekundärlicht 44 nachgewiesen werden kann. Dies kann in einigen Anwendungsfällen, vor allem bei opaken Medien, z.B. trübe flüssige Phasen oder bei stark streuenden biologischen Proben, wie menschliches oder tierisches oder pflanzliches Gewebe, eine Empfindlichkeitssteigerung ggf. bis zu einem Faktor 100 gegenüber anderen herkömmlichen Raman- und Fluoreszenzsensoren aufweisen. Es sind insbesondere transkutane Fluoreszenzemissionsmessungen von endogenen- und exogenen Fluorophoren, oder transdermale oder transkutane Messungen der Ramanstreuung (Stokes- und oder Anti-Stokes) körpereigener Moleküle mit hoher Sensitivität möglich. Es können jedoch auch klare Lösungen untersucht werden. Hierfür ist die simultane Anwendung mehrerer Primärlaser sinnvoll.

Als AOTF kann zum Beispiel ein Festkörper-AOTF der Firma AA Opto Electronic S.A.R.L., 18 Rue Nicolas Appert, F-91898 Orsay Cedex, Frankreich oder der Firma Gooch & Housego PLC, Diwlish Ford, Ilminster, TA19, 0PF, UK verwendet werden.

In den hier beschriebenen Ausführungsbeispielen lassen sich Eintrittsöffnungen mit einem Durchmesser von größer als 3 mm, vorzugsweise 6 mm Durchmessern oder darüber verwenden und abbilden, woraus sich eine Steigerung der Nachweisempfindlichkeit ergibt, wenn das leuchtende Objekt eine Ausdehnung von größer als 0,6 mm Durchmesser aufweist. Die Grundüberlegungen hierzu basieren auf der sogenannten Helmholtz-Lagrange-Gleichung, die besagt, dass ein Gegenstand durch eine irgendwie geartete Optik auf ein Abbild abgebildet werden kann, wenn das Produkt aus Brechungsindex des umgebenden Mediums dem Sinus des Aperturwinkels und der Objektgröße konstant bleibt. Bei verkleinernden Abbildungen steigt also naturgemäß der Sinus des Aperturwinkels. Da Raman- und Fluoreszenzphänomene inelastisch isotrop in alle Raumrichtungen streuen, ist die Apertur des abzubildenden Gegenstandes durch den Aperturwinkel der Frontlinse definiert. In besonders günstig gestalteten Anwendungen kann der Quotient aus Durchmesser der Frontlinse und Abstand des Objektes bei ca. 1:1 liegen, ggf. etwas darüber. Wenn jedoch dieser Gegenstand letztendlich auf ein Pixel abgebildet werden soll, kann keine weitere Verkleinerung stattfinden, da größere Aperturwinkel von dem Pixel nicht detektiert werden können. Vgl. hierzu Fig. 2, die eine herkömmliche Ramansonde mit eng begrenzter Nachweiseffizienz zeigt.

In Fig. 2 ist der kleine abbildbare Anteil 12 innerhalb einer Probe 10 mit einer herkömmlichen Ramansonde dargestellt. Lichtstrahlen 14 aus diesem Bereich gelangen über eine Linse 16 auf eine Fläche 18, die aus Glasfaserenden besteht, die zum Wellenlängendispersiven Teil des Spektrometers geführt sind. In besonderen Anordnungen werden Querschnittswandler verwendet, die die Glasfasern 20 auf eine gereihte Anordnung 22 transformieren. Die Breite 24 dieser Anordnung 22 bestimmt die Wellenlängenauflösung des Spektrometers. Im Gegensatz dazu besteht dieser Zusammenhang bei der erfindungsgemäßen Anordnung (Fig. 1) nicht, da das Prinzip der örtlichen Wellenlängen-Dispersion nicht angewandt wird. Wieder Bezug nehmend auf Fig. 2 werden Lichtstrahlen 15 aus dem äußeren Teil 13 des Emissionsbereichs von der Optik 16 neben die empfangene Fläche aus Glasfaserenden 18 abgebildet. Diese Sekundärlichtstrahlen 15 gelangen also nicht über den Eintrittsspalt 26 auf den Detektor (nicht dargestellt). Wird der Aperturwinkel verkleinert, wirkt die Abbildung eher vergrößernd.

Wieder Bezug nehmend auf die erfindungsmäße Ausführungsform gemäß Fig. 1 strahlt eine Lichtquelle in Form eines Lasers 30 einen Primärlichtstrahl 32 senkrecht zur optischen Achse A des optischen Systems ein. Der Primärlichtstrahl 32 wird mittels eines Primärlichtspiegels 34 in Form eines metallischen, also nicht-dichroitischen Spiegels in Richtung der optischen Achse A eingespiegelt, um entlang der optischen Achse A auf die Probe 40 eingestrahlt zu werden. Die Bestrahlung der Probe 40 erfolgt vorzugsweise im Freistrahl des Lasers 30, also ohne den Primärlaserstrahl 32 zu fokussieren. Dieser wird in dem Beispiel in Fig. 1 lediglich kollimiert, aber nicht fokussiert. Die Bestrahlung der Probe 40 erzeugt im vorliegenden Beispiel Ramanstreuung und Fluoreszenzanregung, so dass Raman-gestreutes und fluoreszentes Licht als Sekundärlicht 44 mit anderer Wellenlänge als das Primärlicht 32 von der Probe 40 emittiert wird. Durch die in solchen stofflichen Anordnungen vorherrschende Mehrfachstreuung verbreitert sich der direkt beleuchtete Teil der Probe zu einem größeren leuchtenden Emissionsbereich 43. Von diesem Emissionsbereich 43 wird Licht in alle Raumrichtungen emittiert. Der Emissionsbereich 43 ist dabei erheblich größer als die kleine Fläche 42, welche eventuell von dem herkömmlichen System in Fig. 2 erfasst werden könnte. Der Emissionsbereich bzw. die Emissionswolke 43 kann von dem in Fig. 1 dargestellten Ausführungsbeispiel hingegen vollständig oder zumindest größtenteils auf die Detektoreinrichtung 58 abgebildet werden. Von der Frontlinse 52, die hier schematisch dargestellt ist und alle dem Fachmann bekannten Ausführungsformen aufweisen kann, wird das von dem streuenden Bereich 43 der Probe 40 emittierte Sekundärlicht 44 gesammelt. Dieses wird dann über die Lichtstrahlen 44a, 44b zu einer weiteren Linse 54 weitergeleitet. Die strahlformende Optik 50 in diesem Beispiel umfasst demnach eine Frontlinse 52 in Form einer Sammellinse und eine Zerstreuungslinse 54. Die Optik 50 bildet demnach die Sekundärlichtstrahlen 44 nicht nur aus der kleinen Fläche 42, sondern auch die Sekundärlichtstrahlen 44 aus dem größeren Emissionsbereich 43 auf das durchstimmbare optische Filter 56, in diesem Beispiel in Form eines AOTF ab. Im vorliegenden Beispiel ist eine optische Abbildung des gesamten Emissionsbereichs 43 dargestellt. Es ist aber auch möglich, dass der Emissionsbereich noch größer ist und die erfindungsgemäße Spektrometervorrichtung 1 auch hiervon zwar nur einen Teil mit der Flächengröße T abbildet, wobei allerdings die Flächengröße T dieses Teils noch immer erheblich größer ist als bei dem herkömmlichen System in Fig. 2.

Das Sekundärlicht gelangt in diesem Beispiel von der Linse 52 also zu einer weiteren strahlformenden oder konditionierenden optischen Einheit 54, die in diesem Ausführungsbeispiel als Zerstreuungslinse 54 ausgebildet ist. In diesem Ausführungsbeispiel wird das Sekundärlicht also zwischen 44a und 44b parallelisiert, d.h. verlässt in einer parallelen oder einem parallelen Strahlenbündel ähnlichen Anordnung die strahlformende Optik 50.

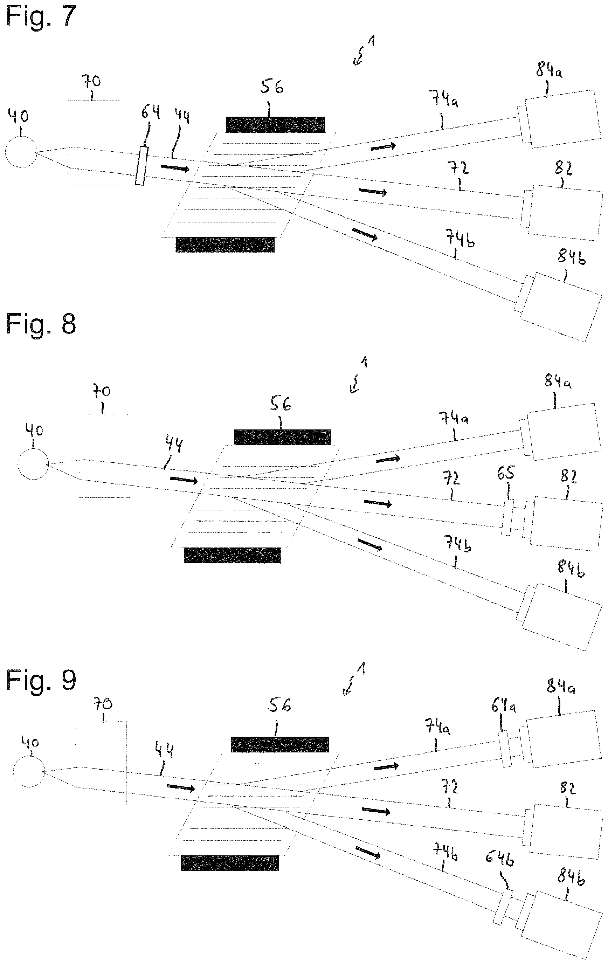

Ein Blocking-Filter 64 filtert die Wellenlänge des Primärlichts zur Primärlichtunterdrückung heraus. Das Blocking-Filter 64 kann zum Beispiel aus einem oder mehreren hintereinandergeschalteten Filtern bestehen, zum Beispiel Lang-, Kurz-, Bandpass-, Notch-, Edge- und/oder Laserlinienfilter. Das Blocking-Filter 64 kann, wie in Fig. 1 beispielhaft dargestellt ist, zwischen den beiden strahlformenden Elementen 52 und 54, also innerhalb der strahlformenden Optik 50 oder wie in den Fig. 7 und 9 dargestellt ist, strahlabwärts der strahlformenden Optik 50 angeordnet sein.

Das durchstimmbare Filter 56, also z.B. das AOTF selektiert eine oder mehrere Wellenlängen ausgewählt durch die Ansteuerung mittels der Steuereinrichtung 66. Diese Ansteuerung kann nach einem Algorithmus stattfinden, der die gemäß der Messaufgabe notwendigen Wellenlängen selektiert. Zu den selektierten Wellenlängen können Wellenlängen z.B. in Emissionsmaxima oder Peaks der zu untersuchenden Stoffe gehören. Die Wellenlängen können aber auch außerhalb liegen und als Referenz dienen. Durch die möglichst schnelle Veränderung der Wellenlänge über das AOTF 56 kann es gelingen, viele Referenzen und viele Stoffinformationen unterschiedlicher, chemischer Moleküle zu detektieren. Das so spektral gefilterte Licht gelangt in die Detektoreinrichtung 58, die möglichst groß ausgeführt ist. Wie vorstehend bereits erläutert wurde, können hier Einzelphotonen-Zähler z.B. customized Photomultiplier (CPM) Anwendung finden und sind im Sinne der erfindungsgemäßen Anordnung sehr günstig einsetzbar. Das Zählergebnis gelangt in die Auswerteeinrichtung 62, die z.B. einen PC, eine Speicherprogrammierbare Steuerung, ein Embedded System oder eine andere dem Datenverarbeitungs-Fachmann bekannte datenverarbeitende Einrichtung umfasst.

Im Wesentlichen wird in diesem Beispiel also das Gesamte in die rechte Raumhälfte emittierte Sekundärlicht 44 (2π Nachweiseffizienz) abgebildet. Ferner wird das gesamte Sekundärlicht 44, welches auf das AOTF 56 abgebildet wird, auch von der Detektoreinrichtung 58 detektiert. Die Flächengröße D der aktiven Nachweisfläche 60 der Detektoreinrichtung 58 beträgt in diesem Beispiel in der Größenordnung von 100 mm².

Demnach kann mit diesem erfindungsgemäßen Ausführungsbeispiel ein Objekt z.B. auf eine Fläche 6 x 6 mm, 8 x 8 mm oder auch darüber abgebildet werden und es kann bei einem Abbildungsverhältnis von 1:1 im Gegenstandsraum eine Durchmesserfläche vom 6 mm, 8 mm oder größer direkt abgebildet werden. Die Detektoreinrichtung 58 ist an die Auswerteeinrichtung 62 angeschlossen, mit welcher die Daten ausgewertet werden. Bei dieser Ausführungsform sind keine Lichtwellenleiter notwendig. Das Sekundärlicht 44 wird ausschließlich durch die refraktiven Elemente 52, 54 der (ausschließlich) refraktiven Optik 50 auf den AOTF 56 abgebildet. Im Strahlengang des Sekundärlichts 44 befindet sich noch das Blocking-Filter 64, welches mit OD4, OD6 oder sogar OD8 (OD: Optische Dichte) die Primärlichtwellenlänge gegen Streuung oder Reflexionen des Primärlichts 32 blockiert.

Mit der erfindungsgemäßen Spektrometervorrichtung 1 können z.B. in den folgenden Anwendungsfällen Vorteile erzielt werden:
Im Bereich der transkutanen Hautmessungen lassen sich Stoffwechselphänomene messtechnisch erfassen. Auf diesem Anwendungsgebiet ist es z.B. möglich eine sogenannte Lactatmessung oder Glucosemessung durchzuführen. Dies bedeutet, dass Licht durch die Haut in das Gewebe eingestrahlt wird. Die verschiedenen Stoffe im Gewebe verursachen eine Fluoreszenzlichterzeugung, z.B. durch Kollagen und Protoporphyrin und andere endogene oder exogene Fluorophore, aber auch einen Ramaneffekt (Stokes- und/oder Anti-Stokes), z.B. durch Lactat, sofern dieses vorhanden ist. Weitere Stoffe, die nachgewiesen werden können, sind z.B.: Adenosintriphosphat, Harnstoff, und/oder Zucker aller Arten.

Vorteile der hier beschriebenen Spektrometervorrichtung 1 treten besonders bei Mehrfachstreuung im Gewebe zu Tage. Auch wenn der Auftreffpunkt bzw. Einstrahlpunkt im Gewebe sehr klein ist, wird das Licht im Gewebe mehrfach hin und her gestreut. Es verlässt dann irgendwann als elastische oder inelastische Streuung das Gewebe nicht mehr exakt an der Stelle der Einstrahlung bzw. in dem kleinen Bereich 42, sondern in dem erheblich größeren Emissionsbereich 43. Damit kommt es zu einer Vergrößerung des leuchtenden Gegenstandes - in diesem Falle der Hautoberfläche. Würde nur der Punkt der Einstrahlung oder nur der kleine Bereich 42 (wie bei den üblichen Ramansonden) abgebildet, würde nur eine kleine Teilmenge des Lichtes erfasst. Mit der vorliegenden Spektrometervorrichtung 1 kann jedoch die erheblich größere Fläche 43 abgebildet werden, was mit einer Empfindlichkeitssteigerung einhergeht. Gegenüber klassischen Photometern hat die vorliegende Spektrometervorrichtung 1 den Vorteil, dass die Durchstimmung des Filters 56, z.B. des AOTFs sehr schnell erfolgen kann. Bei klassischen Filtern kann zwar durch Verkippung von interferierenden Flächen, wodurch die Interferenzbedingungen durch schräge Einstrahlung verändert werden und dadurch die konstruktive Interferenz bei anderen Wellenlängen auftritt auch eine Veränderung der Wellenlänge erfolgen. Hierzu ist jedoch eine mechanische Verstellung notwendig. Zudem verändert sich der optische Weg durch Brechungseffekte je nach Anstellwinkel. Diese Nachteile treten bei AOTFs nicht auf. Zudem könnte, je nachdem, wie sich die Polarisationsrichtung des Lasers ändert, der AOTF in umgekehrter Weise durchstrahlt werden und der AOTF ähnlich einem dicroic mirror genutzt werden.

Die extreme Blockung der elastischen Lichtstreuung der Primärlichtwellenlänge wird über das Blocking-Filter 64 erreicht.

Vorteilhaft ist insbesondere die Kombination der Nutzung des Ramaneffektes (Stokes- und/oder Antistokes ggf. simultan beide Effekte) und Fluoreszenzeffektes in Geweben und anderen Objekten in Verbindung mit Lasereinstrahlung, großflächig wirkenden Sensoroptiken, AOTFs, Blocking-Filtern und großflächigen Detektoren.

Die Anwendungsbreite ist nicht auf menschliches oder tierisches Gewebe limitiert. Auch Messungen in trüben Medien wie Suspensionen, Dispersionen und Emulsionen ist mit der vorliegenden Spektrometervorrichtung 1 möglich. Die Anwendungen lassen sich im sportmedizinischen Bereich, bei der Zuckerkrankheitsbehandlung (Diabetes), bei Erkennung gefährlicher Zustände z.B. bei Geburten von Babys oder anderweitig einsetzen. Auch in Kombination mit besonderen Anordnungen auf der Detektionsseite lassen sich Vorteile darstellen. Hier kann die Ramanstreuung und Fluoreszenzmessung geringer Konzentrationen in Lösungen angeführt werden. Dabei können z.B. Einstrahlungen in innenverspiegelten Röhren verwendet werden, bei denen der Laserstrahl durch die Röhre hindurchgeht und das in alle Raumrichtungen gestreute Fluoreszenz- und Ramanlicht an die innenverspiegelte Wand gelangt und so über Mehrfachreflektion aus dem Streuvolumen austritt. Die Röhre mit z.B. einem Innendurchmesser von 6 mm wird dann auf der ganzen Fläche Raman- und Fluoreszenzstrahlung abgeben. Dieses Sekundärlicht kann mit der erfindungsgemäßen Spektrometervorrichtung 1 gegenüber bekannten Systemen mit höherer Nachweiseffizienz detektiert werden.

Ein weiterer möglicher Einsatz der erfindungsgemäßen Spektrometervorrichtung 1 ist der Einsatz in der Robotik. Aufgrund der Selektivität der Ramanspektroskopie kann der Roboter z.B. während des Greifens Kunststoffe unterscheiden oder durch die Möglichkeit der kontaktlosen Ramanmessung Stoffkonzentrationen in Behältnissen, z.B. in Bechergläsern oder Kunststoffbehältnissen, direkt und schnell ermitteln. Mögliche Einsatzfelder sind sowohl im Zuge der Industrie 4.0 Initiative im Bereich intelligenter Sensorik als auch Sprengstoffdetektion gegeben.

Weitere Anwendungen in der Festkörperphysik oder in der Oberflächenbetrachtung sind ebenfalls möglich, wie z.B. bei Gläsern oder anderen teiltransparenten und teilweise trüben Medien oder Medien mit vielen Brechungsindexübergängen wie z.B. Schnee.

Ein Vorteil der Erfindung liegt auch darin begründet, dass je nach Anwendung die Laserleistung bis hinunter zu einem Milliwatt oder ggf. sogar darunter reduziert werden kann. Auch hier sind weitere Möglichkeiten z.B. in der Messung von Stäuben in der Luft oder von Trübungen im Wasser oder in anderen partikulären oder dispers-phasigen Anwendungen möglich. Ein weiterer Aspekt ist die Anwendung zur Überwachung chemischer oder pharmazeutischer Reaktionen oder Reaktoren. Durch die große Toleranz hinsichtlich des Auftreffpunktes der Strahlung kann ein fluktuierender Brechungsindex, der sich lokal und zeitlich z.B. durch Oberflächenwellen auf Fluiden ändert, toleriert werden. Dies tritt dann auf, wenn Schlieren in fluiden Produkten oder Krümmungen auf Oberflächen auftreten, die den Lichtstrahl lokal unterschiedlich in die Probe führen, weil es an der Oberfläche zur Lichtbrechung kommt. In diesen Anwendungsfällen ist das genannte Nachweissystem wesentlich toleranter gegenüber leichten Fehlfokussierungen oder Ablenkungen des Lichtstahles als herkömmliche Systeme, die eine örtliche Dispersion verwenden.

Bezug nehmend auf Fig. 3 kann der Laser 30 zur Erzeugung des Primärlichtstrahls 32 in eine Sonde 70 integriert sein. Der Primärlicht-Laserstrahl 32 wird in diesem Beispiel als Freistrahl ohne Fokussierung über einen nicht-dichroitischen Primärlichtspiegel 34 auf die Probe 40 gerichtet. Es erfolgt also auch in diesem Beispiel keine Fokussierung des Primärlichtstrahls 32, so dass die Sonde 70 EX-fähig sein kann, wenn der Laser 30 EX-fähig ist. Die Optik 50, welche ebenfalls in der Sonde 70 integriert ist, bildet das von dem Emissionsbereich 43 emittierte Sekundärlicht auf den AOTF 56 ab. Der Primärlichtspiegel 34 blockiert innerhalb der Sonde 70 direkte Reflexe des Primärlichtstrahls 32, da der Primärlichtspiegel 34 in diesem Beispiel vor der Optik 50, zum Beispiel vor der Frontlinse 52 angeordnet ist.

Das AOTF 56 generiert aus dem Sekundärlichtstrahl 44, der aus der Optik 50 beziehungsweise aus der Sonde 70 austritt, einen mittleren Strahl nullter Ordnung 72 sowie zwei Strahlen erster Ordnung 74a, 74b, welche beidseits des Strahls nullter Ordnung den AOTF 56 verlassen. Der eine Strahl erster Ordnung 74a ist im Wesentlichen ortsfest, wohingegen der andere Strahl erster Ordnung 74b beim Durchstimmen etwas hin und her springen kann. Der Strahl nullter Ordnung 72 und die beiden Strahlen erster Ordnung 74a, 74b werden von der Detektoreinrichtung 58 detektiert. In diesem Beispiel umfasst die Detektoreinrichtung 58 hierfür drei Detektoren 82, 84a, 84b zur getrennten Detektion des Strahls nullter Ordnung 72 bzw. der beiden Strahlen erster Ordnung 74a, 74b. Der Detektor 82 für den Strahl nullter Ordnung kann zur Messung des Gesamtspektrums, zum Beispiel für eine Trübungsmessung verwendet werden, kann aber auch durch eine einfache Lichtfalle ersetzt werden. Der Hauptdetektor 84a liegt in Vorzugsrichtung des AOTF 56, um den ortsfesten Strahl erster Ordnung 74a zu detektieren. Der Nebendetektor 84b detektiert den nicht in Vorzugsrichtung des AOTF 56 liegenden, also nicht ortsfesten Strahl erster Ordnung 74b.

In der Ausführungsform in Fig. 3 befindet sich der Primärlichtspiegel 34 zwischen der Probe 40 und der Optik 50 oder einfach ausgedrückt vor der Optik 50.

Bezug nehmend auf Fig. 4 kann der Primärlichtspiegel 34 optional entlang der optischen Achse A verfahren werden. Wenn der Spiegel, zum Beispiel elektronisch gesteuert, entlang der optischen Achse A vor- und zurück verfahren wird, kann hiermit der DOF-Wert (Schärfentiefe) eingestellt werden. Ferner kann die Größe der mittels des Primärlichtspiegels 34 ausgeblendeten Fläche verändert werden, indem der Primärlichtspiegel verfahren wird. Je größer die von dem Primärlichtspiegel ausgeblendete Fläche ist, umso mehr Sekundärlicht kann von weiter weg vom Strahlfleck des Primärlichtstrahls detektiert werden. Sekundärlicht, welches von einer größeren Entfernung vom Strahlfleck emittiert wird, stammt tendenziell aus größeren Gewebetiefen. Daher kann mit dem Verfahren des Primärlichtspiegels in gewisser Weise auch die nachweisbare Penetrationstiefe variiert werden.

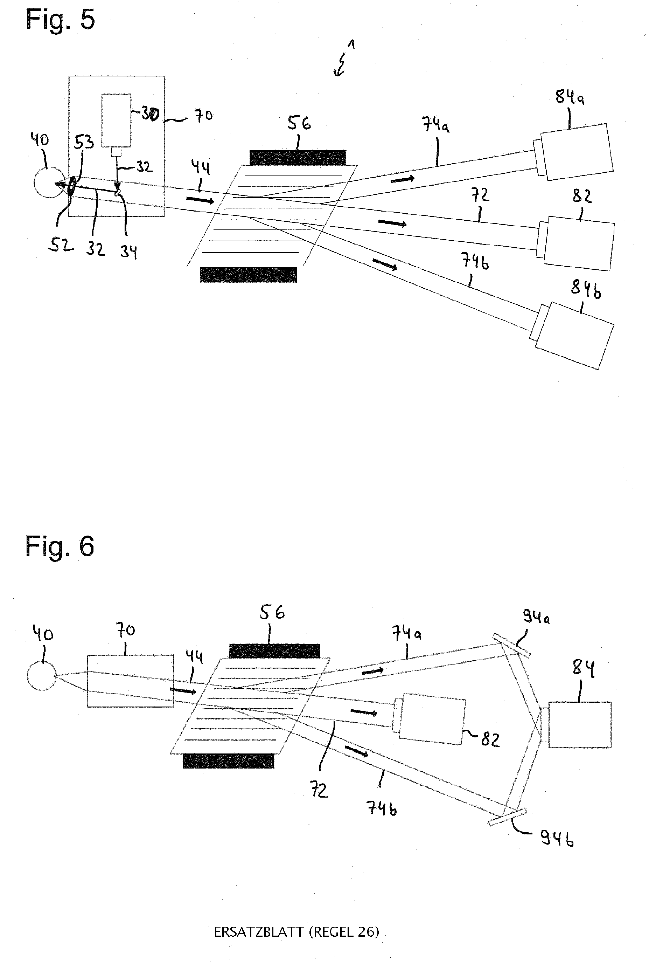

Bezug nehmend auf Fig. 5, kann der Primärlichtspiegel 34 anstatt vor der Optik 50 auch hinter zumindest einem Teil der Optik 50, in dem gezeigten Beispiel hinter der Frontlinse 52, angeordnet sein. Der Primärlichtspiegel 34 befindet sich allerdings noch immer in der Sonde 70, bzw. zwischen der Frontlinse 52 und dem AOTF 56. Wenn der Primärlichtspiegel 34 wie gezeigt hinter dem Element 52 der Optik angeordnet ist, weist das optische Element 52, zum Beispiel die Frontlinse, vorzugsweise eine Bohrung 53 auf, durch welche der Primärlichtstrahl 32 unfokussiert hindurchtreten kann. Dadurch kann die EX-Fähigkeit aufrechterhalten werden. Gegebenenfalls kann in der Bohrung 53 in der Frontlinse 52 ein nicht-Lichtstrahlformendes Fenster (nicht dargestellt) eingebaut sein. Ansonsten entspricht die Ausführungsform der Fig. 5 derjenigen aus Fig. 3.

Bezug nehmend auf Fig. 6 kann die Detektoreinrichtung 58 mit einem einzigen Detektor 84 zum Detektieren beider Strahlen nullter Ordnung 74a, 74b auskommen und mit ggf. einem Detektor 82 zum Detektieren des Strahls nullter Ordnung 72. Die beiden Strahlen erster Ordnung 74a, 74b werden von jeweils einem Sekundärlichtspiegel 94a, 94b auf denselben Detektor 84 gespiegelt, sodass der Detektor 84 beide Strahlen erster Ordnung 74a, 74b detektiert.

Die Fig. 7-9 zeigen unterschiedliche mögliche Stellen zur Anordnung des Blocking-Filters 64 und sind ansonsten wie die Ausführungsformen in Fig. 3 oder 5 aufgebaut.

In der Ausführungsform der Fig. 7 ist das Blocking-Filter 64 vor dem AOTF 56 angeordnet. Dies kann außerhalb der Sonde 70, wie in Fig. 7 dargestellt ist, oder innerhalb der Sonde 70 sein. In der Ausführungsform der Fig. 8 ist ein Filter 65 vor dem Detektor 82 zur Detektion des Strahls nullter Ordnung angeordnet. Bei dem Filter 65 kann es sich um einen Neutraldichtefilter, ggf. um einen einstellbaren Neutraldichtefilter bzw. ein Bandpassfilter handeln, um die Rayleighstreuung alleinig aus der 0-ten Ordnung zu erfassen. In der Ausführungsform der Fig. 9 befindet sich jeweils ein Blocking-Filter 64a, 64b vor den beiden Detektoren 84a, 84b, welche jeweils einen der beiden Strahlen erster Ordnung 74a, 74b detektieren. Mit anderen Worten kann das Blocking-Filter 64 also auch zwischen dem durchstimmbaren optischen Filter 56 und der Detektoreinrichtung 58 bzw. dem oder den Detektoren 84a und/oder 84b angeordnet sein.

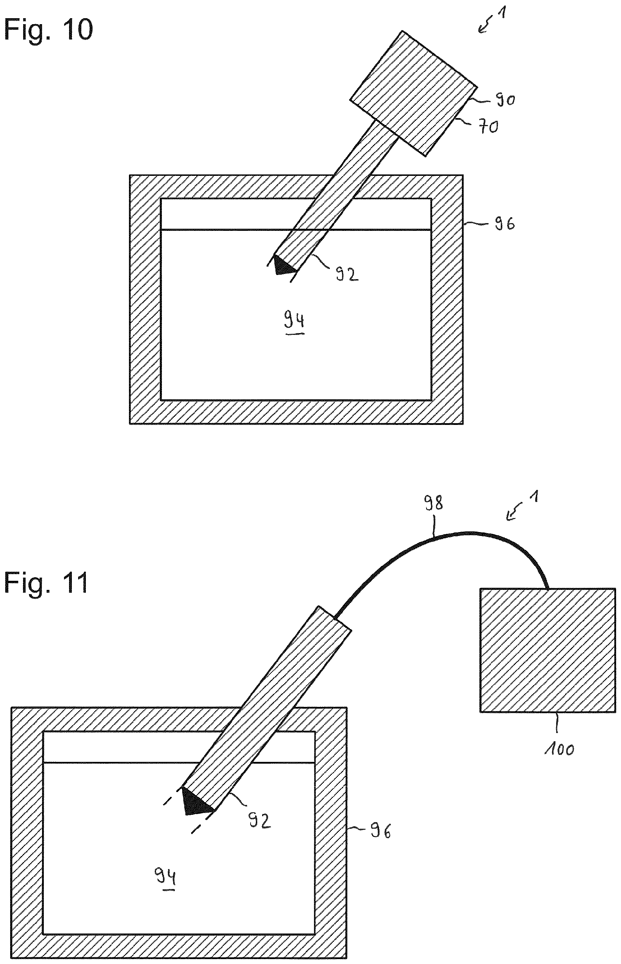

Die Fig. 10-13 zeigen verschiedene Möglichkeiten der Sondengestaltung.

Bezug nehmend auf Fig. 10 ist die komplette Spektrometervorrichtung 1 in eine kompakte Sonde 70 integriert. Mit anderen Worten befinden sich die Spektrometervorrichtung 1 einschließlich der Sonde 70 in einem gemeinsamen Gehäuse 90, insbesondere ein EXzertifiziertes Gehäuse. Die Sonde 70 ist als Immersionssonde ausgebildet, so dass die Sondenkopf 92 in das Medium 94 in dem Reaktor 96 eingetaucht werden kann.

Bezug nehmend auf Fig. 11 kann ein Auswerteteil 100 der Spektrometervorrichtung 1 von dem Sondenkopf 92 getrennt werden, so dass der Sondenkopf 92 nach wie vor in das Medium 94 eingetaucht werden kann. Der Sondenkopf 92 ist hier jedoch über Lichtwellenleiter 98 mit dem Auswerteteil 100 der Spektrometervorrichtung 1 verbunden. Der Lichtwellenleiter 98 kann zum Beispiel zwischen der Optik 50 und dem AOTF 56 angeordnet sein, so dass sich die optischen Bauteile bis zu der Optik 50 in dem Sondenkopf 92 befinden und das AOTF 56 sowie die Detektoreinrichtung 58 und gegebenenfalls die Auswerteinrichtung 62 in dem Auswerteteil 100 der Spektrometervorrichtung 1 angeordnet sind. Mit anderen Worten sind die Sende- und Empfangsoptik 50 der Spektrometervorrichtung 1 räumlich von dem durchstimmbaren optischen Filter 56 getrennt und flexibel mittels der Lichtwellenleiter 98 optisch miteinander verbunden.

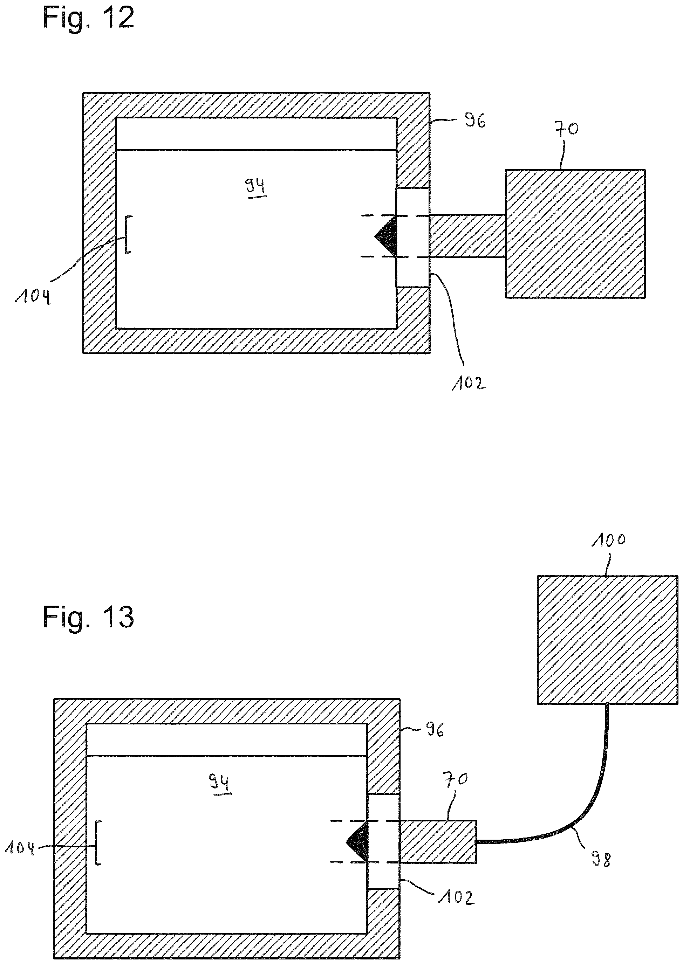

Die Fig. 12 und 13 zeigen entsprechende Ausführungsformen wie die Fig. 10 und 11, wobei die Sonde 70 jedoch nicht als Immersionssonde, sondern als externe Sonde ausgebildet ist und das Primärlicht durch ein Fenster 102 in den Reaktor 96 einkoppelt und das Sekundärlicht durch das Fenster 102 auskoppelt. Zur weiteren Unterdrückung der Primärlichtwellenlänge kann eine Lichtfalle oder ein Beamstop 104 zur Unterdrückung von Reflexionen vorgesehen sein, was sich auch auf die anderen Ausführungsformen übertragen lässt.

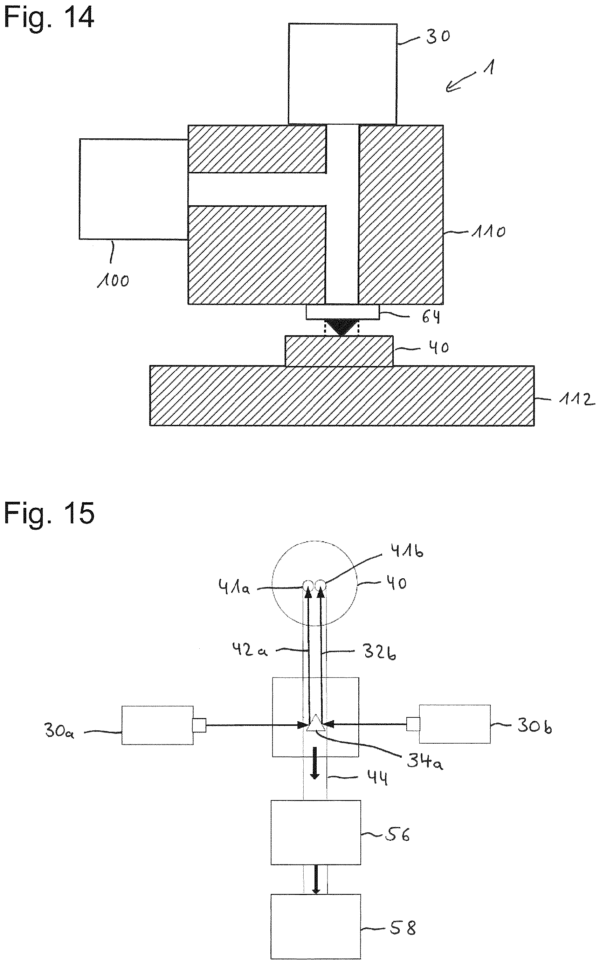

Bezug nehmend auf Fig. 14 kann die erfindungsgemäße Spektrometervorrichtung 1 in ein Mikroskop 110 integriert sein. Hierbei kann der Laser 30 senkrecht auf eine Probe 40 einstrahlen, wobei der Primärlichtstrahl 32 in diesem Beispiel auch fokussiert werden kann (aber nicht zwingend muss). Das Blocking-Filter 64 kann zwischen der Probe 40 und dem Objektiv (nicht dargestellt) des Mikroskops 110 angeordnet sein. Der Auswerteteil 100 der Spektrometereinrichtung ist in diesem Beispiel senkrecht zur Einstrahlung des Primärlichts 32 und der optischen Achse des Mikroskops 110 angeordnet und das Sekundärlicht wird über einen Sekundärlichtspiegel (nicht dargestellt) in den Auswerteteil 100 ausgekoppelt. Die Probe 40 kann automatisiert mittels eines verfahrbaren Tischs 112 in x-, y- und/oder z-Richtung bewegt werden.

Bezug nehmend auf Fig. 15 können zwei Laser 30a, 30b verwendet werden. Die Primärlichtstrahlen 32a, 32b der beiden Laser 30a, 30b werden über einen besonderen Primärlichtspiegel 34a mit Facettenschliff parallel zueinander auf die Probe 40 gespiegelt. Hierdurch entstehen zwei Messpunkte 41a, 41b auf der Probe, so dass ein größerer Bereich der Probe gleichzeitig untersucht werden und/oder die Lichtintensität des Primärlichts auf der Probe 40 erhöht werden kann, ohne die EX-Zertifizierung zu verlieren. In diesem Beispiel sind beide Laser 30a, 30b EX-zertifiziert und werden nicht fokussiert, sondern die Primärlichtstrahlen 32a, 32b werden beide als Freilichtstrahl auf die Probe 40 gerichtet, so dass die gesamte Anordnung ebenfalls EX-fähig ist. Das Sekundärlichtspektrum kann anschließend wie bei den anderen Ausführungsformen über das AOTF 56 und die Detektoreinrichtung 58 ausgewertet werden. In gleicher Weise können auch mehr als zwei, z.B. drei, vier, acht oder sechzehn Laser gleichzeitig eingekoppelt werden.

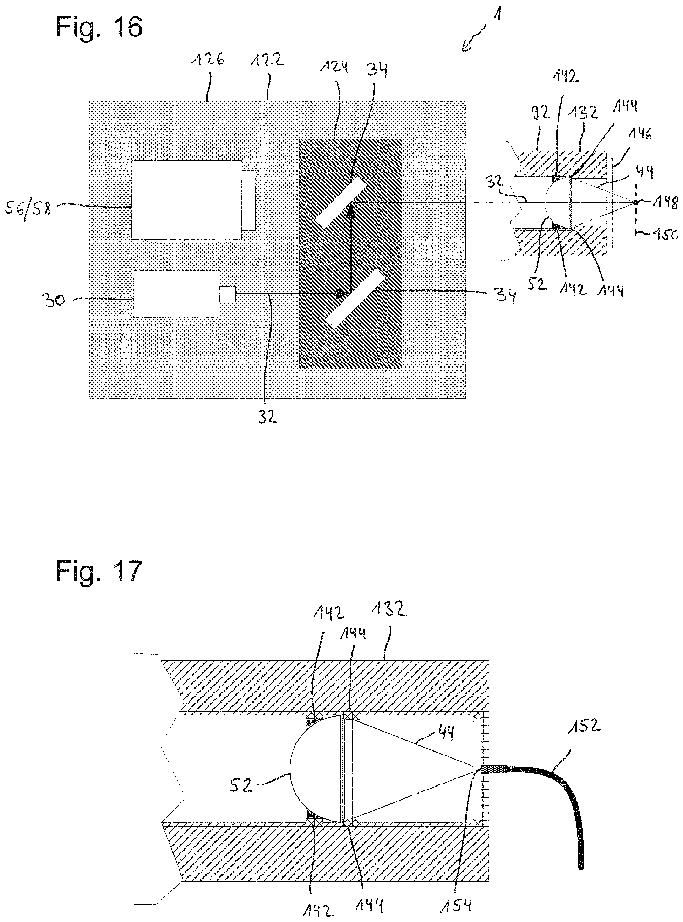

Bezug nehmend auf Fig. 16 können der oder wie in diesem Beispiel zwei Primärlichtspiegel 34 und/oder die Primärlichtquelle 30 und/oder das AOTF 56 und/oder die Detektoreinrichtung 58 an einer Halteeinrichtung 122 befestigt sein. Die Halteeinrichtung 122 kann ein Halteelement 124 für den oder die Primärlichtspiegel 34 und eine Halteplatte 126, auf welcher das Halteelement 124, die Primärlichtquelle 30, das AOTF 56 und/oder die Detektoreinrichtung 58 befestigt sind, umfassen.

In dem in Fig. 16 gezeigten Ausführungsbeispiel weist der vordere Teil des Sondenkopfes 92 eine zylindrische Sondenspitze 132 auf. Die Frontlinse 52 ist in der Sondenspitze 132 angeordnet und mittels eines Befestigungsrings 142 gegen einen umlaufenden Anschlag 144 in der Sondenspitze 132 befestigt. Die Sondenspitze132 weist ein Ein- und Austrittsfenster 146 auf. Der Primärlichtstrahl 32 kann in diesem Beispiel von der Frontlinse 52 fokussiert werden oder die Frontlinse 52 ist durchbohrt, wie in Fig. 5 dargestellt. Das Sekundärlicht 44 wird von der Frontlinse 52 fokussiert, um über die weiteren Teile der Optik 50 auf das AOTF 56 und die Detektoreinrichtung 58 abgebildet zu werden (vgl. Fig. 1-9). Der Brennpunkt 148 der Frontlinse 52 definiert die Tiefe der Schicht, welche von der Sondenspitze abgebildet wird. Um den Abstand des Brennpunktes 148 bzw. der Brennebene 150 bei Temperaturschwankungen möglichst präzise definieren zu können, kann die Sondenspitze 132 aus Invar oder einem faserverstärkten Kunststoff, insbesondere CFK hergestellt sein. Zur Erhöhung der mechanischen Präzision bei Temperaturschwankungen können auch die Halteeinrichtung 122, das Halteelement 124 und/oder die Halteplatte 126 für die optischen Bauteile des Systems aus Invar oder einem faserverstärkten Kunststoff, insbesondere CFK hergestellt sein. Allgemein können diese Gehäuse- bzw. Halteteile 132, 122, 124 und/oder 126 aus einem Material mit einem Wärmeausdehnungskoeffizienten von kleiner oder gleich 5*10⁻⁶/K, vorzugsweise kleiner oder gleich 2*10⁻⁶/K hergestellt sein.

Bezug nehmend auf die Fig. 17 erfolgt bei dieser Ausführungsform an der Sondenspitze 132 eine Einkopplung bzw. Auskopplung des Lichts in eine bzw. aus einer optischen Faser 152. Um die Fokussierung auf die Ein- bzw. Austrittsfläche 154 der optischen Faser 152 möglichst temperaturunabhängig zu gestalten, ist es auch hier vorteilhaft, die Sondenspitze 132 bzw. Teile der Sondenspitze 132 aus dem Material mit einem Wärmeausdehnungskoeffizienten von kleiner oder gleich 5*10⁻⁶/K, vorzugsweise kleiner oder gleich 2*10⁻⁶/K, z.B. Invar oder CFK zu fertigen.

Zusammenfassend bietet die hier beschriebene Kombination aus einer geeigneten (Laser-)Lichtquelle 30 und der Optik 50 mit einem Acousto Optic Tunable Filter 56 (AOTF) und einer großflächigen Detektionsfläche 60 im Bereich der Raman- und Fluoreszenzspektroskopie und der Raman- und Fluoreszenzphotometrie Vorteile gegenüber bisherigen Raman- und Fluoreszenzsensoren. Vorteile liegen in einer hohen Nachweisempfindlichkeit bei gleichzeitig einfacher Bauweise. Neben Raman- und Fluoreszenzspektroskopie sind auch Anwendungen in der Absorptionsspektroskopie UV/VIS/NIR realisierbar, die bisher aufgrund der kleinen Photonenströme nicht zugänglich waren, z.B. Messungen bei stark absorbierenden oder streuenden Objekten bzw. Proben. Auch für Transmissionsmessungen an Proben mit großen Extinktionskoeffizienten ist die erfindungsgemäße Anordnung sinnvoll, insbesondere wenn aufgrund des aussagekräftigen großen Probenvolumens mit hohen Extinktionen bis zur Extinktion 6 oder höher gearbeitet wird und die Extinktion gemäß der dem Fachmann bekannten Definition als negativer Dekadischer Logarithmus der Transmission verstanden wird.

Die Erfindung ist vielseitig anwendbar. Es sind unter anderem folgende Anwendungen für die Erfindung möglich, d.h. mögliche Einsatzgebiete finden sich unter anderem in den folgenden Bereichen:
- In der Oberflächenbetrachtung
- In der Untersuchung von teilweise trüben Medien oder Medien mit vielen Brechungsindexübergängen wie z.B. Schnee
   o aber auch im biotechnologischen Bereich (Fermentationen)
- In der Messung von Stäuben in der Luft oder von Trübungen im Wasser oder in anderen partikulären oder dispers-phasigen Anwendungen
- In der Überwachung chemischer oder pharmazeutischer Reaktionen oder Reaktoren
- In der Petrochemie
- In der Reaktionstechnik (Überwachung von Mischprozessen aber auch Mehrphasenströmungen)
- Zur Detektion und Identifikation von explosiven Medien und Sprengstoffen (Festkörper, Pulver, flüssig, gasförmig, Gele)
- Zur Detektion, Klassifikation und Bestimmung der Zusammensetzung von Drogen und Medikamenten
- Im Bergbau zur Detektion, Klassifikation und Bestimmung der Zusammensetzung z.B. Phosphatgesteine (z.B. Phosphorit, Guano, Nauru, Diatomit) Salze und Ester der Orthophosphorsäure (H3PO4) oder sonstige Salze von Säuren aber auch terrestrischaride Salzlagerstätten (Soda, Borax, Salpeter) oder Faulschlammlagerstätten, Sapropelite (Schwarzschiefer und Erdölmuttergesteine), Lagerstätten des bakteriellen Schwefelkreislaufs, Marine Ausscheidungslagerstätten z.B. Chemische Ausscheidungslagerstätten (Kalke, Dolomite, Sulfatgesteine, (Tagebau, Bergbau, Black Smokers), aber auch Lagerstätten der Biolithe
- Zur Detektion, Klassifikation und Bestimmung der Zusammensetzung von Futtermitteln
- Zur Detektion, Klassifikation und Bestimmung der Zusammensetzung von Dünger
- Als Verfahrensschritte im pharmazeutischen und chemischen-Bereich
   o Kristallisationsvorgänge
   ∘ Mischvorgänge (Feststoffe und Pulver)
   ∘ Trennverfahren, z.B. Destillation/Rektifikation (Überwachung des Kopf- und Sumpf)
   ∘ Extraktionen
   ∘ Absorptionen/Adsorptionen
- Zur Überwachung der Elektrolytalterung (ionische Flüssigkeiten/Säuren etc.), der chemischen Veränderungen von Batteriesystemen und Brennstoffzellen oder des Eindringens von Feuchte und sonstigen Stoffen (wie Schwefel), die zur Vergiftung der Batterie bzw. Brennstoffzelle führen können
- Zur Untersuchung von Aushärtungsvorgängen von Lacken und Klebstoffen
- Zur Oberflächenbetrachtung/Scanning: UVVIS; FL, Raman, MIR in Mikroskopie (Medizintechnik, Katalysatortechnik, Oberflächenanalytik allgemein), ggf. mittels Drohnen oder Flugzeugen, z.B. in der Agrarüberwachung
- In der Festkörperphysik
- Zur Überwachung chemischer oder pharmazeutischer Reaktionen oder Reaktoren
- In der Lebensmitteltechnik: Überwachung von Zucker-, Wasser- und Fettgehalten auch simultan
- Zur Messung von Stäuben in der Luft oder von Trübungen im Wasser oder in anderen partikulären oder dispers-phasigen Anwendungen
- Zur Hautuntersuchung: dermal, transdermal (höchste Streukoeffizienten im Körper, und Chromophore, Hämoglobin und Melanine, jeweils in inhomogener Verteilung), endogene und exogene Markerstoffe (Fluorophore und Raman-aktive Substanzen aber auch Absorber)
- Angebracht an Schiffe, U-Boote - Detektion von Ölteppiche über Wasser (z.B. Identifikation ob Rohöl, Benzin, Diesel, Leichtbenzin, Kerosin uvm.), aber auch Chemikalieneinleitung unter Wasser im Meer möglich (U-Boot kann z.B. vor Einleitungsrohre fahren/tauchen), oder Ansammlungen von Kunstoffen, oder zur Detektion von sonstigem gefährlichem Müll im Meer
- Zum Einsatz bei der Feuerwehr (mobil oder auf Fahrzeug bzw. Feuerwehrschiff) - z.B. Schnell-Identifikation von ausgelaufenen Chemikalien
- In der Bombenräumung - Sprengstoffdetektion oder Klassifikation von brennbaren oder explosiven Gelen, Feststoffen oder Flüssigkeiten auf, Fahrzeuge, unbemannten Fahrzeugen aber auch Drohnen z.B. zur Bombenentschärfung und Identifikation von Stoffen (auch ABC-Stoffe)
- Im Einsatz in Messstellen im explosionsgeschützten Bereich

Im Folgenden sind Applikationen zu den einzelnen Techniken bzw. Kombinationen derer gelistet. Zu den Anwendungen im Einzelnen:
Es kann Raman- Fluoreszenz- und/oder Absorptionsspektroskopie an stark absorbierenden Stoffen durchgeführt werden, z.B.:
- An durchgefärbten Kunststoffen und Lasuren, Lacken und sonstigen Stoffen der Oberflächenvergütung (z.B. der Kunststoff Bakelit, der durch Zugabe von Rußpartikeln seine typisch schwarze Farbe erhält)
- An Autolacken (z.B. Verfolgung des Aushärtevorganges aber auch Lösungsmittelrest etc.)
- An Karbonfaserverbundstoffen in der Automobil- und Luftfahrzeugindustrie
- In der Überwachung des Aushärtungsprozesses oder in der Untersuchung der Oberfläche nach vorgeschriebenen Zeiträumen, z.B. bei Oberflächen die UV-Strahlung ausgesetzt sind
- In der Untersuchung des Feuchtegehaltes (NIR) von Braun-/Steinkohle, Erdöl oder Ölschiefer
- In der Untersuchung des Schwefelgehaltes (Raman) Braun-/Steinkohle, Erdöl oder Ölschiefer, z.B. vor der Verbrennung im Kohlekraftwerk oder direkt im Berg- oder Tagebau oder während der Erdölförderung (z.B. Schwefel und Wassergehalte, Kohlenstoff-Kettenlängen, Verhältnis Wasser/Organik-Anteil)
- Zur Verwirklichung von Transmissionsstrecken auch in stark absorbierenden Medien, welche sonst nur mit ATR- oder TIR-Technik untersucht werden könnten. Hierbei kann die Aussagekraft allerdings durch das sehr kleine Probenvolumen beschränkt sein und es ist darauf zu achten, dass das eigentliche Prozessmedium und nicht der Belag gemessen wird, wenn das Produkt zur Belagsbildung neigen sollte
- In der Lebensmittelüberwachung, insbesondere in der Obst-, Gemüse-, Fleischüberwachung
- In der Untersuchung von Haut, insbesondere dermal, transdermal

Es kann Raman und/oder Fluoreszenzspektroskopie ggf. in Kombination mit Absorptionsspektroskopie durchgeführt werden, z.B.
- an Farben und Lacken, insbesondere wenn diese mit streuenden Partikeln oder sonstigen hervorgerufen Streuzentren, z.B. TiO2 oder Calciumcarbonat versetzt sind,
- in der Lebensmittelüberwachung, insbesondere in der Obst-, Gemüse-, Fleischüberwachung oder
- in der Gesteinsanalytik oder Geologie

Messungen von stark streuenden Medien und Kombination mehrerer Messtechniken:

### Fluoreszenzemission:

Eine Fluoreszenzemissions-Messung wird durch die Probenmatrix direkt beeinflusst:
   - Absorptionsvorgänge im Anregungs- und Emissionspfad
   - Streuvorgänge im Anregungs- und Emissionspfad
   - Überlagerung durch andere Fluorophore (Mehrwellenlängenanregung mittels eines zweiten AOTFs auf der Anregungsseite), es könnten z.B. mehrere Anregungswellenlängen mittels geblitzter LEDs geschrieben werden

### Ramanstreuung:

Die Messung der Ramanstreuung wird durch die Probenmatrix direkt beeinflusst:
- Absorptionsvorgänge im Anregungs- und Detektionspfad
- Streuvorgänge im Anregungs- und Detektionspfad
- Kombinierbar mit an sich bekannter Zwei-Wellenlängenanregung um den Fluoreszenzuntergrund mathematisch abzuziehen

Im Vergleich zu den jetzigen photometrischen Messtechniken können nahezu beliebig viele Messkanäle und Referenzkanäle, sowohl für eine Auto-Streulicht-, also auch für eine Auto-Absorptionskorrektur für die genannten Systeme umgesetzt werden. Ein von Matrixeffekten (Absorption und Streuung) nahezu bereinigtes Signal kann aus diesen Kanälen berechnet werden.

Im Vergleich zu den jetzigen photometrischen Messtechniken können nahezu beliebig viele Messkanäle und Referenzkanäle, sowohl für eine Auto-Streulicht-, also auch für eine Auto-Absorptionskorrektur für die genannten Systeme umgesetzt werden. Ein von Matrixeffekten (Absorption und Streuung) nahezu bereinigtes Signal kann aus diesen Kanälen berechnet werden.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, innerhalb des Schutzbereichs der angehängten Ansprüche.

## Patentansprüche

1. Spektrometervorrichtung (1), insbesondere zur Raman-, Fluoreszenz-, und/oder Absorptionsspektrometrie umfassend
eine Lichtquelle (30) zur Erzeugung von Primärlicht (32) zur Beleuchtung einer Probe (40), um mit dem Primärlicht Ramanstreuung, Fluoreszenz und/oder Absorption in der Probe anzuregen, wobei die Lichtquelle derart ausgebildet ist, dass die Probe (40) Sekundärlicht (44) mit einem Sekundärlicht-Spektrum emittiert, wobei das Sekundärlicht-Spektrum durch Ramanstreuung des Primärlichts (32) in der Probe (40), durch Fluoreszenz in der Probe und/oder durch Absorption in der Probe erzeugt wird,
einen Primärlichtspiegel (34), in Form eines metallischen, also nicht-dichroitischen Spiegels, mittels welchem das Primärlicht (32) eingespiegelt wird um entlang einer optischen Achse (A) auf die zu untersuchende Probe (40) eingestrahlt zu werden,
eine Optik (50) mit optischen Elementen (52, 54) zur Abbildung eines Emissionsbereiches (43) des Sekundärlichts (44) aus der Probe (40),
ein optisches Filter (56), welches das von der Optik (50) abgebildete Sekundärlicht (44) filtert,
eine Steuereinrichtung (66) zur Ansteuerung des optischen Filters (56),
eine Detektoreinrichtung (58), welche das von dem optischen Filter (56) gefilterte Sekundärlicht (44) detektiert, und
eine Auswerteeinrichtung (62) zur Auswertung der von der Detektoreinrichtung detektierten Wellenlängen des Sekundärlichts,
wobei das optische Filter (56) als ein durchstimmbares optisches Filter (56) ausgebildet ist, derart dass die von dem durchstimmbaren optischen Filter (56) an die Detektoreinrichtung (58) durchgelassenen Wellenlängen des Sekundärlichtes (44) mittels Ansteuerung des durchstimmbaren optischen Filters (56) durch die Steuereinrichtung (66) auswählbar sind,
wobei das Primärlicht (32) als ein Primärlichtstrahl vorliegt, und wobei der Primärlichtstrahl lediglich kollimiert, und/oder nicht auf die Probenoberfläche fokussiert ist, und
wobei der Primärlichtspiegel (34) derart im Strahlengang des Sekundärlichts (44) von der Probe angeordnet ist, dass der Primärlichtspiegel (34) als Blende für Reflexionen des Primärlichts (32) von der Probenoberfläche wirkt, wobei der Primärlichtspiegel (34) zwischen der Probe (40) und den optischen Elementen der Optik (50) angeordnet ist, oder zumindest ein optisches Element (52) der Optik (50) zwischen dem Primärlichtspiegel (34) und der Probe (40) angeordnet ist und dieses optische Element (52) eine Bohrung (53) aufweist, um das Primärlicht (32) durch die Bohrung (53) auf die Probe (40) durchzulassen, wobei der Primärlichtspiegel (34) hinter dem optischen Element (52) der Optik (50) angeordnet ist.

2. Spektrometervorrichtung (1) nach dem vorstehenden Anspruch,
wobei die Detektoreinrichtung (58) einen Detektor (84) aufweist und beide Strahlen erster Ordnung (74a, 74b), die das durchstimmbare optische Filter (56) erzeugt, auf denselben Detektor (84) abgebildet werden oder wobei die Detektoreinrichtung (58) zumindest zwei Detektoren (84a, 84b) aufweist und der eine der beide Strahlen erster Ordnung (74a) von dem einen (84a) der beiden Detektoren detektiert wird und der andere der beiden Strahlen erster Ordnung (74b) von dem anderen (84b) der beiden Detektoren detektiert wird.

3. Spektrometervorrichtung (1) nach einem der vorstehenden Ansprüche,
wobei die Lichtquelle (30) einen Laser, einen Multicolorlaser, einen RGB-Laser, einen Weißlichtlaser, eine LED oder eine breitbandige Lichtquelle umfasst, und/oder wobei die Probe mit einer Primär-Lichtleistung von kleiner oder gleich 35 mW, vorzugsweise kleiner oder gleich 10 mW, vorzugsweise kleiner oder gleich 5 mW bestrahlbar ist.

4. Spektrometervorrichtung (1) nach einem der vorstehenden Ansprüche,
wobei die Lichtquelle (30) einen Laser mit zumindest zwei Dioden umfasst, um eine Zwei-Wellenlängenanregung zur Fluoreszenzunterdrückung durchzuführen und/oder beim Ausfall einer der beiden Dioden auf die andere der beiden Dioden umzuschalten.

5. Spektrometervorrichtung (1) nach einem der vorstehenden Ansprüche,
wobei der Primärlichtspiegel (34) längs der optischen Achse (A) der Primärlichteinstrahlung verschiebbar angeordnet ist.

6. Spektrometervorrichtung (1) nach einem der Ansprüche 2-5,
wobei eine aktive Nachweisfläche (60) des Detektors (84, 84a, 84b) eine Flächengröße von größer oder gleich 1 mm², insbesondere größer oder gleich 10 mm², insbesondere größer oder gleich 100 mm² beträgt aufweist, und/oder die Optik (50) zumindest einen Teil des Emissionsbereichs (43) der Probe (40) auf den Detektor abbildet, wobei der abgebildete Teil des Emissionsbereichs (43) größer oder gleich 1 mm², insbesondere größer oder gleich 10 mm² ist.

7. Spektrometervorrichtung (1) nach einem der vorstehenden Ansprüche,
wobei eine Sonde (70) umfasst ist, aus welcher das Primärlicht (32) emittiert wird, um das Primärlicht (32) auf oder in die zu untersuchende Probe (40, 94) zu strahlen und wobei die Sonde (70) das Sekundärlicht (44) empfängt, um das Sekundärlicht (44) mittels der Optik (50) und dem durchstimmbaren optischen Filter (56) der Detektoreinrichtung (58) zuzuführen, und
wobei zumindest die Optik (50), das optische Filter (56) und die Detektoreinrichtung (58) und vorzugsweise noch die Lichtquelle (30), ein Blocking-Filter (64) und/oder die Auswerteeinrichtung (62) in die Sonde (70) integriert sind.

8. Spektrometervorrichtung (1) nach Anspruch 7,
wobei die Sonde (70) ein Gehäuse, welches zum Einsatz in explosionsgeschützten Umgebungen geeignet ist (EX-Gehäuse), aufweist.

9. Spektrometervorrichtung (1) nach einem der vorstehenden Ansprüche,
wobei der Primärlichtspiegel (34) ein Facettenspiegel (34a) ist, und wobei die Lichtquelle (30) mehrere Laser (30a,30b), welche zum Einsatz in explosionsgeschützten Umgebungen geeignet sind (EX-Laser), umfasst, und die Laserstrahlen (32a, 32b) der mehreren EX-Laser mittels des Facettenspiegels (34a) zur Bestrahlung der Probe (40) eingekoppelt werden.

10. Verfahren zur spektralen Analyse eines Sekundärlicht-Spektrums, welches von einer zu untersuchenden Probe emittiert wird, mit einem Spektrometer nach einem der Ansprüche 1-9, umfassend die Schritte:
a) Erzeugen eines Primärlichtstrahls (32) mit einer Primärlichtwellenlänge,
b) Einstrahlen des Primärlichtstrahls (32) auf oder in eine zu untersuchende Probe (40),
c) Empfangen des Sekundärlichts (44) in zumindest einem Wellenlängenintervall mit Wellenlängen, welche größer und/oder kleiner als die Primärlichtwellenlänge sind,
d) Abbilden des Sekundärlichts (44) mit der Optik (50),
e) ggf. Blockieren der Primärlichtwellenlänge mittels eines Blocking-Filters (64),
f) Einstellen des durchstimmbaren optischen Filters (56) auf ein erstes Sekundärlichtwellenlängen-Intervall,
g) Messen der Intensität des Sekundärlichts (44) in dem ersten Sekundärlichtwellenlängen-Intervall mit der Detektoreinrichtung (58),
h) nachfolgend Einstellen des durchstimmbaren optischen Filters (56) auf ein zweites von dem ersten Sekundärlichtwellenlängen-Intervall verschiedenen Sekundärlichtwellenlängen-Intervall,
i) Messen der Intensität des Sekundärlichts (44) in dem zweiten Sekundärlichtwellenlängen-Intervall mit der Detektoreinrichtung (58),
j) Auswerten der Intensitäten des Sekundärlichts (44) in dem ersten und zweiten Sekundärlichtwellenlängen-Intervall.

11. Verfahren nach Anspruch 10,
wobei die Schritte h) und i) in einer Vielzahl von weiteren Sekundärlichtwellenlängen-Intervallen innerhalb eines zu untersuchenden Wellenlängen-Intervalls des Sekundärlicht-Spektrums durchgeführt werden, indem das durchstimmbare optische Filter (56) in einem zeitlichen Messintervall über das zu untersuchende Wellenlängen-Intervall des Sekundärlichtspektrums durchgestimmt wird,
um ein Nachweisspektrum des Sekundärlichts (44) über ein zu untersuchendes Wellenlängen-Intervall zu erzeugen.

12. Verfahren nach einem der vorstehenden Ansprüche10 oder 11,
wobei streuende, insbesondere opake Proben (40) untersucht werden, welche einen räumlich ausgedehnten Emissionsbereich (43) des Sekundärlichts (44) erzeugen, dessen Ausdehnung quer zu dem eingestrahlten Primärlichtstrahl (32) größer ist als die Querschnittsfläche des Primärlichtstrahls (32) und wobei zumindest ein Teil des Emissionsbereichs von der Optik (50) auf die Detektoreinrichtung (58) abgebildet und das Sekundärlicht (44) aus diesem Teil gleichzeitig detektiert wird, wobei die Ausdehnung quer zu dem eingestrahlten Primärlichtstrahl (32) dieses abgebildeten und gleichzeitig detektierten Teils ebenfalls größer ist als die Querschnittsfläche des Primärlichtstrahls (32).

13. Verfahren nach einem der vorstehenden Ansprüche 10-12,
wobei das von der Probe (40) emittierte Sekundärlicht (44) vor dem durchstimmbaren Filter (56) parallelisiert wird.

14. Verfahren nach einem der vorstehenden Ansprüche 10-13,
wobei das Verfahren zumindest eines der folgenden Merkmale aufweist:
a. die Detektoreinrichtung (58) umfasst zumindest einen zeitauflösenden Detektor (84, 84a, 84b) und das Primärlicht (32) wird gepulst auf oder in die Probe (40) eingestrahlt, und das Sekundärlicht (44) wird mit dem zeitauflösenden Detektor zeitaufgelöst detektiert und koinzident mit der Pulsung des Primärlichtes (32) ausgewertet,
b. die Detektoreinrichtung (58) detektiert an jedem Punkt ihrer Nachweisfläche zu einem bestimmten Zeitpunkt die gleichen Wellenlängen oder simultan mehrere Wellenlängen des Sekundärlichts (44),
c. unterschiedliche Wellenlängen des Sekundärlichts (44) werden in dem zu detektierenden Wellenlängenintervall des Sekundärlichts (44) zu unterschiedlichen Zeiten detektiert werden.

15. Verwendung der Spektrometervorrichtung (1) gemäß einem der Ansprüche 1-9 oder des Verfahrens gemäß einem der Ansprüche 10-14 für zumindest eine der folgenden Anwendungen:
In der Oberflächenbetrachtung,
in der Untersuchung von teilweise trüben Medien oder Medien mit vielen Brechungsindexübergängen, wie z.B. Schnee,
im biotechnologischen Bereich, z.B. bei Fermentationen,
in der Messung von Stäuben in der Luft oder von Trübungen in Wasser oder in anderen partikulären oder dispers-phasigen Anwendungen,
in der Überwachung chemischer oder pharmazeutischer Reaktionen oder Reaktoren,
in der Petrochemie,
in der Reaktionstechnik, z.B. zur Überwachung von Mischprozessen oder Mehrphasenströmungen,
zur Detektion und Identifikation von explosiven Medien und Sprengstoffen, einschließlich Festkörper, Pulver, flüssige Medien, gasförmige Medien, Gele,
zur Detektion, Klassifikation und Bestimmung der Zusammensetzung von Drogen und Medikamenten,
im Bergbau zur Detektion, Klassifikation und Bestimmung der Zusammensetzung von z.B. Phosphatgesteinen, z.B. Phosphorit, Guano, Nauru, Diatomit, Salzen und Estern der Orthophosphorsäure (H3PO4) oder sonstigen Salzen von Säuren oder terrestrischariden Salzlagerstätten (Soda, Borax, Salpeter) oder Faulschlammlagerstätten, Sapropeliten (Schwarzschiefer und Erdölmuttergesteine), Lagerstätten des bakteriellen Schwefelkreislaufs, marinen Ausscheidungslagerstätten, z.B. chemischen Ausscheidungslagerstätten (Kalke, Dolomite, Sulfatgesteine, (Tagebau, Bergbau, Black Smokers), oder Lagerstätten der Biolithe,
zur Detektion, Klassifikation und Bestimmung der Zusammensetzung von Futtermitteln,
zur Detektion, Klassifikation und Bestimmung der Zusammensetzung von Düngern,
als Verfahrensschritte im pharmazeutischen und chemischen-Bereich, z.B. in Kristallisationsvorgängen, Mischvorgängen (Feststoffe und Pulver), Trennverfahren, z.B. Destillation/Rektifikation (Überwachung von Kopf- und Sumpf), Extraktionen, Absorptionen/Adsorptionen,
zur Überwachung der Elektrolytalterung, z.B. bei ionischen Flüssigkeiten/Säuren, der chemischen Veränderungen von Batteriesystemen und Brennstoffzellen oder des Eindringens von Feuchte und sonstigen Stoffen, wie z.B. Schwefel, die zur Vergiftung der Batterie bzw. Brennstoffzelle führen können,
zur Untersuchung von Aushärtungsvorgängen von Lacken und Klebstoffen,
zur Oberflächenbetrachtung/Scanning: UV/VIS, FL, Raman, MIR in der Mikroskopie, z.B. in der Medizintechnik, der Katalysatortechnik, der Oberflächenanalytik allgemein, ggf. mittels Drohnen oder Flugzeugen, z.B. in der Agrarüberwachung,
in Anwendungen in der Festkörperphysik,
zur Überwachung chemischer oder pharmazeutischer Reaktionen oder Reaktoren;
in der Lebensmitteltechnik, z.B. zur Überwachung von Zucker-, Wasser- und Fettgehalten, insbesondere auch simultan,
zur Messung von Stäuben in der Luft oder von Trübungen im Wasser oder in anderen partikulären oder dispers-phasigen Anwendungen,
zur Hautuntersuchung, insbesondere dermal, transdermal, z.B. zur Detektion von Stoffen mit hohen Streukoeffizienten im Körper, von Chromophoren, Hämoglobin oder Melaninen, jeweils in inhomogener Verteilung, von endogenen und exogenen Markerstoffen, z.B. Fluorophoren, Raman-aktiven Substanzen, und/oder Absorbern, insbesondere in vivo, in vitro oder ex vivo,
angebracht an Schiffe oder U-Boote zur Detektion von Ölteppichen über Wasser, z.B. zur Identifikation ob Kohlenwasserstoffe wie Rohöl, Benzin, Diesel, Leichtbenzin, Kerosin ausgetreten sind, oder zum Nachweis von Chemikalieneinleitungen unter Wasser, z.B. im Meer, wenn z.B. ein U-Boot vor ein Einleitungsrohr fährt oder taucht, oder um Ansammlungen von Kunstoffen, oder sonstigem gefährlichem Müll im Meer zu detektieren,
zum Einsatz bei der Feuerwehr, z.B. mobil oder auf einem Fahrzeug oder einem Feuerwehrschiff, insbesondere zur Schnell-Identifikation von ausgelaufenen Chemikalien,
in der Bombenräumung, z.B. zur Sprengstoffdetektion oder Klassifikation von brennbaren oder explosiven Gelen, Feststoffen oder Flüssigkeiten ggf. auf Fahrzeugen, unbemannten Fahrzeugen oder Drohnen, z.B. zur Bombenentschärfung und Identifikation von Stoffen, einschließlich ABC-Stoffen,
zum Einsatz in Messstellen im explosionsgeschützten Bereich,
zur Raman-, Fluoreszenz- und/oder Absorptionsspektroskopie, z.B.
an stark absorbierenden Stoffen, z.B. an durchgefärbten Kunststoffen oder Lasuren, Lacken oder sonstigen Stoffen der Oberflächenvergütung, z.B. der Kunststoff Bakelit, der durch Zugabe von Rußpartikeln seine typisch schwarze Farbe erhält,
an Autolacken, z.B. zur Verfolgung des Aushärtevorganges oder des Lösungsmittelrests,
an Karbonfaserverbundstoffen in der Automobil- und Luftfahrzeugindustrie,
in der Überwachung des Aushärtungsprozesses oder zur Untersuchung der Oberfläche nach vorgeschriebenen Zeiträumen, z.B. bei Oberflächen die UV-Strahlung ausgesetzt sind,
in der Untersuchung des Feuchtegehaltes (NIR) von Braun-/Steinkohle, Erdöl oder Ölschiefer,
in der Untersuchung des Schwefelgehaltes von Braun-/Steinkohle, Erdöl oder Ölschiefer mittels Ramanmessung, z.B. vor der Verbrennung im Kohlekraftwerk oder direkt im Berg- oder Tagebau oder während der Erdölförderung, z.B. zur Bestimmung des Schwefel und Wassergehalts, von Kohlenstoff-Kettenlängen, des Verhältnisses Wasser/Organik-Anteil,
zur Verwirklichung von Transmissionsstrecken auch in stark absorbierenden Medien, welche sonst nur mit ATR- oder TIR-Technik untersucht werden könnten,
in der Lebensmittelüberwachung, insbesondere in der Obst-, Gemüse-, Fleischüberwachung, zur Untersuchung von Haut, insbesondere dermal, transdermal,
zur Raman und/oder Fluoreszenzspektroskopie in Kombination mit Absorptionsspektroskopie, z.B.
an Farben und Lacken, insbesondere wenn diese mit streuenden Partikeln oder sonstigen hervorgerufen Streuzentren, z.B. TiO2 oder Calciumcarbonat versetzt sind,
in der Lebensmittelüberwachung, insbesondere in der Obst-, Gemüse-, Fleischüberwachung,
in der Gesteinsanalytik oder Geologie
für Messungen in stark streuenden Medien und in Kombination mehrerer Messtechniken, insbesondere für Fluoreszenzemissions-Messungen, die durch die Probenmatrix direkt beeinflusst werden, zur Messung von
Absorptionsvorgängen im Anregungs- und Emissionspfad
Streuvorgängen im Anregungs- und Emissionspfad
Überlagerungen durch andere Fluorophore, z.B. durch Mehrwellenlängenanregung mittels eines zweiten AOTFs auf der Anregungsseite, dabei können z.B. mehrere Anregungswellenlängen mittels geblitzter LEDs geschrieben werden,
zur Messung der Ramanstreuung, welche durch die Probenmatrix direkt beeinflusst wird:
zur Messung von Absorptionsvorgängen im Anregungs- und Detektionspfad,
zur Messung von Streuvorgängen im Anregungs- und Detektionspfad,
in Kombination mit Zwei-Wellenlängenanregung um den Fluoreszenzuntergrund mathematisch abzuziehen,
zur Bestimmung von Lactatwerten, Harnstoffwerten, Nierenfunktionswerten, Tumorwerten, Collagenwerten, des Feuchtegehalts oder zur Diagnose von Pigmentveränderungen oder Hautkrebs.

## Claims

1. Spectrometer device (1), in particular for Raman, fluorescence and/or absorption spectrometry, comprising
a light source (30) for generating primary light (32) for illuminating a sample (40) in order to initiate, using the primary light, Raman scattering, fluorescence and/or absorption in the sample, wherein the light source is constructed in such a way that the sample (40) emits secondary light (44) with a secondary light spectrum, wherein the secondary light spectrum is generated by Raman scattering of the primary light (32) in the sample (40), by fluorescence in the sample and/or by absorption in the sample,
a primary light mirror (34) in the form of a non-dichroic metal mirror, by means of which the primary light (32) is reflected in order to be irradiated along an optical axis (A) onto the sample (40) to be examined,
an optical system (50) having optical elements (52, 54) for the imaging of an emission zone (43) for secondary light (44) from the sample (40),
an optical filter (56) which filters the secondary light (44) imaged by the optics (50),
a control device (66) for controlling the optical filter (56),
a detector device (58) which detects the secondary light (44) filtered by the optical filter (56), and
an evaluation device (62) for evaluating the wavelengths of the secondary light detected by the detector device,
wherein the optical filter (56) is configured as a tunable optical filter (56) in such a way that the wavelengths of the secondary light (44) passing from the tunable optical filter (56) to the detector device (58) can be selected by the control device (66) by driving the tunable optical filter (56),
wherein the primary light (32) is present as a primary light beam, and wherein the primary light beam is merely collimated and/or is not focused on the sample surface, and
wherein the primary light mirror (34) is arranged in the optical path of the secondary light (44) from the sample in such a way that the primary light mirror (34) acts as a diaphragm for reflections of the primary light (32) from the sample surface,
wherein the primary light mirror (34) is arranged between the sample (40) and the optical elements of the optics (50), or
at least one optical element (52) of the optics (50) is arranged between the primary light mirror (34) and the sample (40) and this optical element (52) comprises a bore (53) for passing the primary light (32) through the bore (53) onto the sample (40), wherein the primary light mirror (34) is arranged behind the optical element (52) of the optics (50).

2. Spectrometer device (1) according to the preceding claim,
wherein the detector device (58) comprises a detector (84) and both of the first-order beams (74a, 74b) which are generated by the tunable optical filter (56) are imaged on the same detector (84), or wherein the detector device (58) comprises at least two detectors (84a, 84b), and one of the two first-order beams (74a) is detected by one (84a) of the two detectors and the other of the two first-order beams (74b) is detected by the other (84b) of the two detectors.

3. Spectrometer device (1) according to any one of the preceding claims,
wherein the light source (30) comprises a laser, multicolor laser, RGB laser, white light laser, LED or broadband light source, and/or wherein the sample can be irradiated with a primary light power of less than or equal to 35 mW, preferably less than or equal to 10 mW, most preferably less than or equal to 5 mW.

4. Spectrometer device (1) according to any one of the preceding claims,
wherein the light source (30) comprises a laser with at least two diodes for implementing two-wavelength excitation for fluorescence suppression and/or for switching, in the event of failure of one of the two diodes, to the other of the two diodes.

5. Spectrometer device (1) according to any one of the preceding claims,
wherein the primary light mirror (34) is arranged so that it can be slid along the optical axis (A) of the primary light irradiation.

6. Spectrometer device (1) according to any one of claims 2 - 5,
wherein an active detection face (60) of the detector (84, 84a, 84b) has an area greater than or equal to 1 mm², in particular greater than or equal to 10 mm², in particular greater than or equal to 100 m², and/or the optics (50) images at least part of the emission zone (43) of the sample (40) onto the detector, wherein the imaged part of the emission zone (43) is greater than or equal to 1 mm², in particular is greater than or equal to 10 mm².

7. Spectrometer device (1) according to any one of the preceding claims,
wherein a probe (70) is comprised, from which the primary light (32) is emitted to emit the primary light (32) onto or into the sample (40, 94) to be examined, and wherein the probe (70) receives the secondary light (44) to supply the secondary light (44) to the detector device (58) by means of the optics (50) and the tunable optical filter (56), and wherein at least the optics (50), the optical filter (56) and the detector device (58) and preferably also the light source (30), a blocking filter (64) and/or the evaluation device (62) are integrated in the probe (70).

8. Spectrometer device (1) according to claim 7,
wherein the probe (70) comprises a housing, which is suitable for use in explosion-protected environments (EX lasers).

9. Spectrometer device (1) according to any one of the preceding claims,
wherein the primary light mirror (34) is a faceted mirror (34a), and wherein the light source (30) comprises a plurality of lasers (30a, 30b), which are suitable for use in explosion-protected environments (EX lasers),
and the laser beams (32a, 32b) of several EX lasers are injected through the facet mirror (34a) to expose the sample (40) to radiation.

10. Method for the spectral analysis of a secondary light spectrum, which is emitted by a sample to be examined, using a spectrometer according to any one of claims 1 - 9, comprising the steps:
a) generating a primary light beam (32) with a primary light wavelength,
b) irradiating the primary light beam (32) onto or into a sample (40) to be examined,
c) receiving the secondary light (44) in at least one wavelength interval with wavelengths which are greater and/or smaller than the primary light wavelength,
d) imaging the secondary light (44) using the optics (50),
e) possibly blocking the primary light wavelength by means of a blocking filter (64),
f) adjusting the tunable optical filter (56) to a first secondary light wavelength interval,
g) measuring the intensity of the secondary light (44) in the first secondary light wavelength interval using the detector device (58),
h) subsequently, adjusting the tunable optical filter (56) to a second secondary light wavelength interval different from the first secondary light wavelength interval,
i) measuring the intensity of the secondary light (44) in the second secondary light wavelength interval using the detector device (58),
j) evaluating the intensities of the secondary light (44) in the first and second secondary light wavelength interval.

11. Method according to claim 10,
wherein steps h) and i) are carried out in a plurality of further wavelength intervals of secondary light within a wavelength interval to be examined of the secondary light spectrum in that the tunable optical filter (56) is varied in a time-measuring interval across the wavelength interval to be examined of the secondary light spectrum,
in order to generate a tracing spectrum of the secondary light (44) across a wavelength interval to be examined.

12. Method according to any one of the preceding claims 10 or 11,
wherein scattering, in particular opaque, samples (40) are examined, which generate a spatially extended emission zone (43) of the secondary light (44), the extent of which transverse to the irradiated primary light beam (32) is greater than the cross-sectional area of the primary light beam (32), and wherein at least part of the emission zone is imaged by the optics (50) onto the detector device (58) and the secondary light (44) from this part is detected at the same time, wherein the extent transverse to the primary light beam (32) irradiated from said reproduced part and detected at the same time is also greater than the cross-sectional area of the primary light beam (32).

13. Method according to any one of the preceding claims 10 - 12,
wherein the secondary light (44) emitted by the sample (40) is parallelized in front of the tunable filter (56).

14. Method according to any one of the preceding claims 10 - 13,
wherein the method comprises at least one of the following features:
a. the detector device (58) comprises at least one time-resolved detector (84, 84a, 84b) and the primary light (32) is pulsed onto or into the sample (40) and the secondary light (44) is detected with time resolution with the time-resolved detector and evaluated coincident with the pulse of the primary light (32),
b. the detector device (58) detects the same or several wavelengths of the secondary light (44) at each point on its detection surface at a given time,
c. different wavelengths of the secondary light (44) are detected at different times in the wavelength interval of the secondary light (44) to be detected.

15. Use of the spectrometer device (1) according to any one of claims 1 - 9 or of the method according to any one of claims 10 - 14 for at least one of the following applications:
for surface observation,
for examination of partially turbid media or media with numerous refractive index transitions, such as snow,
in biotechnology, for example during fermentation,
for measuring dust in air or turbidity in water, or in other particle physics or dispersed-phase applications,
for monitoring chemical or pharmaceutical reactions or reactors,
in the petrochemical sector,
in reaction technology, for example to monitor mixing processes or multiphase flows,
for the detection and identification of explosive products and explosives, including solids, powders, liquid media, gaseous products and gels,
for detecting, classifying and determining the composition of drugs and medicines,
in mines for the detection, classification and determination of the composition of e.g. phosphate rocks, e.g. phosphorite, guano, Nauru rock, diatomite, salts and esters of orthophosphoric acid (H3PO4) or other acid salts or arid earth salt deposits (soda, borax, saltpeter) or putrefaction sludge deposits, sapropels (oil shale and petroleum source rocks), bacterial sulfur circuit deposits, marine disposal deposits, e.g. chemical disposal deposits (lime, dolomite, sulfate rocks (open-cast mine, mine, black smokers), or biolith deposits,
for detecting, classifying and determining the composition of animal feed products,
for detecting, classifying and determining the composition of fertilizers,
as method steps in the pharmaceutical and chemical fields, e.g. in crystallization processes, mixing processes (solids and powder), separation processes, e.g. distillation/rectification (overhead and bog monitoring), extractions, absorptions/adsorptions,
for monitoring electrolyte ageing, e.g. for ionic liquids/acids, chemical changes in battery and fuel cell systems, or ingress of moisture and other substances, such as sulfur, which can lead to contamination of the battery or fuel cell,
for testing paint and adhesive curing processes,
for surface observation/scanning: UV/VIS, FL, Raman, MIR in microscopy, e.g. in medical techniques, catalyst technology, surface analysis generally, possibly by means of drones or aircraft, e.g. for agricultural monitoring,
in solid-state physics applications,
for monitoring chemical or pharmaceutical reactions or reactors;
in food technology, e.g. for monitoring sugar, water and fat content, in particular also simultaneously,
for measuring dust in air or turbidity in water, or in other particle physics or dispersed-phase applications,
for skin examination, in particular dermal, transcutaneous, e.g. for the detection of substances with high diffusion coefficients in the body, chromophores, hemoglobin or melanins, respectively in inhomogeneous distribution, endogenous and exogenous markers, e.g. fluorophores, substances with Raman activity and/or absorbers, in particular in vivo, in vitro or ex vivo,
applied to ships or submarines for the detection of oil spills on water, e.g. for the identification of the release or non-release of hydrocarbons, such as crude oil, gasoline, diesel, mineral spirits, kerosene, or to demonstrate the presence of chemical introductions underwater, e.g. into the sea, when e.g. a submarine passes in front of an introduction tube or dives, or to detect accumulations of plastics, or other hazardous waste in the sea,
for use by fire-fighters, e.g. on a mobile basis or on a fire-fighting vehicle or boat, in particular for rapid identification of escaped chemicals,
in bomb disposal, e.g. for explosives detection or classification of flammable or explosive gels, solids or liquids, possibly on vehicles, unmanned vehicles or drones, e.g. for mine clearance and substance identification, including ABC substances,
for use at measuring points in explosion-protected areas,
for Raman, fluorescence and/or absorption spectroscopy, e.g. on highly absorptive substances, e.g. on fully colored plastics or lasures, paints or other surface treatment substances, e.g. bakelite, which retains its typically black color by the addition of soot particles,
on autoclaves, for example to monitor the curing process or solvent residues,
on carbon fiber composites in the automotive and aeronautics industries,
for monitoring the curing process or examining the surface after prescribed periods of time, e.g. for surfaces exposed to UV radiation,
for examining the moisture content (NIR) of lignite/coal, oil or oil shale,
for examining the sulfur content of lignite/coal, oil or oil shale by means of Raman measurement, e.g. prior to combustion in the coal-fired power plant or directly in mines or open-cast mines or during oil extraction, e.g. to determine sulfur and water content, carbon chain lengths, water/organic ratio,
for the realization of transmission paths even in highly absorbent products, which could otherwise only be examined using the ATR or TIR technique,
for monitoring food products, particularly fruit, vegetables and meats, to examine the skin, especially by cutaneous or transcutaneous means,
for Raman and/or fluorescence spectroscopy in combination with absorption spectroscopy, for example
on stains and paints, especially when mixed with diffusion particles or other induced diffusion centers, e.g. TiO2 or calcium carbonate,
for monitoring food products, particularly fruit, vegetables and meat,
in rock analysis or geology,
for measurements in highly scattering media and in combination with several measurement techniques, in particular for fluorescence emission measurements, which are directly influenced by the sample matrix, for the measurement of
absorption processes on the generation and emission path,
diffusion processes on the generation and emission path,
superimpositions by other fluorophores, for example by generating multiple wavelengths by means of a second AOTF on the generation side, whereby several generation wavelengths can be written by means of flash LEDs,
for measuring Raman scattering, which is directly influenced by the sample matrix,
for measuring absorption processes in the generation and detection path,
for measuring diffusion processes on the generation and detection path,
in combination with two-wavelength generation to mathematically deduce the fluorescence base,
for the determination of lactate levels, urea levels, kidney function values, tumor levels, collagen levels, moisture content or for the diagnosis of pigmented lesions or skin cancers.

## Revendications

1. Dispositif de spectromètre (1), en particulier de spectrométrie Raman, à fluorescence et/ou à absorption, comprenant
une source de lumière (30) destinée à produire de la lumière primaire (32) pour éclairer un échantillon (40) pour générer, avec la lumière primaire, une diffusion Raman, de la fluorescence et/ou une absorption dans l'échantillon, dans lequel la source de lumière est réalisée de telle manière que l'échantillon (40) émet de la lumière secondaire (44) avec un spectre de lumière secondaire, dans lequel le spectre de lumière secondaire est généré par diffusion Raman de la lumière primaire (32) dans l'échantillon (40), par fluorescence dans l'échantillon et/ou par absorption dans l'échantillon,
un miroir de lumière primaire (34) sous la forme d'un miroir métallique donc non dichroïque, au moyen duquel la lumière primaire (32) est réfléchie pour être irradiée sur l'échantillon (40) à examiner le long d'un axe optique (A),
une optique (50) avec des éléments optiques (52, 54) pour réaliser une zone d'émission (43) de la lumière secondaire (44) depuis l'échantillon (40),
un filtre optique (56), lequel filtre la lumière secondaire (44) reproduite par l'optique (50),
un système de commande (66) destiné à piloter le filtre optique (56),
un système détecteur (58), lequel détecte la lumière secondaire (44) filtrée par le filtre optique (56), et
un système d'évaluation (62) destiné à évaluer les longueurs d'onde de la lumière secondaire détectées par le système détecteur,
dans lequel le filtre optique (56) est réalisé en tant qu'un filtre optique (56) variable de telle manière que les longueurs d'onde de la lumière secondaire (44) passant du filtre optique (56) variable au système détecteur (58) peuvent être sélectionnées par le système de commande (66) au moyen d'un pilotage du filtre optique (56) variable,
dans lequel la lumière primaire (32) est présente en tant qu'un rayon de lumière primaire, et dans lequel le rayon de lumière primaire est seulement collimaté et/ou n'est pas concentré sur la surface d'échantillon, et
dans lequel le miroir de lumière primaire (34) est disposé de telle manière sur le chemin optique de la lumière secondaire (44) depuis l'échantillon que le miroir de lumière primaire (34) agit comme un diaphragme pour des réflexions de la lumière primaire (32) depuis la surface d'échantillon,
dans lequel le miroir de lumière primaire (34) est disposé entre l'échantillon (40) et les éléments optiques de l'optique (50), ou
au moins un élément optique (52) de l'optique (50) est disposé entre le miroir de lumière primaire (34) et l'échantillon (40) et cet élément optique (52) présente un alésage (53) pour faire passer la lumière primaire (32) à travers l'alésage (53) sur l'échantillon (40), dans lequel le miroir de lumière primaire (34) est disposé derrière l'élément optique (52) de l'optique (50).

2. Dispositif de spectromètre (1) selon la revendication précédente,
dans lequel le système détecteur (58) présente un détecteur (84) et deux rayons de premier ordre (74a, 74b), que le filtre optique (56) variable génère, qui sont reproduits sur le même détecteur (84) ou dans lequel le système détecteur (58) présente au moins deux détecteurs (84a, 84b), et l'un des deux rayons de premier ordre (74a) est détecté par l'un (84a) des deux détecteurs et l'autre des deux rayons de premier ordre (74b) est détecté par l'autre (84b) des deux détecteurs.

3. Dispositif de spectromètre (1) selon l'une quelconque des revendications précédentes, dans lequel la source de lumière (30) comprend un laser, un laser multicolore, un laser RVB, un laser à lumière blanche, une DEL ou une source de lumière à large bande, et/ou dans lequel l'échantillon peut être exposé à un rayonnement avec une puissance de lumière primaire inférieure ou égale à 35 mW, de préférence inférieure ou égale à 10 mW, de préférence inférieure ou égale à 5 mW.

4. Dispositif de spectromètre (1) selon l'une quelconque des revendications précédentes, dans lequel la source de lumière (30) comprend un laser avec au moins deux diodes pour mettre en oeuvre une génération de deux longueurs d'onde pour la suppression de fluorescence et/ou pour passer, lors de la panne d'une des deux diodes, sur l'autre des deux diodes.

5. Dispositif de spectromètre (1) selon l'une quelconque des revendications précédentes, dans lequel le miroir de lumière primaire (34) est disposé de manière à pouvoir être coulissé le long de l'axe optique (A) de l'irradiation de lumière primaire.

6. Dispositif de spectromètre (1) selon l'une quelconque des revendications 2 - 5,
dans lequel une face de traçabilité (60) active du détecteur (84, 84a, 84b) présente une surface supérieure ou égale à 1 mm², en particulier supérieure ou égale à 10 mm², en particulier supérieure ou égale à 100 m², et/ou l'optique (50) reproduit au moins une partie de la zone d'émission (43) de l'échantillon (40) sur le détecteur, dans lequel la partie reproduite de la zone d'émission (43) est supérieure ou égale à 1 mm², en particulier est supérieure ou égale à 10 mm².

7. Dispositif de spectromètre (1) selon l'une quelconque des revendications précédentes,
dans lequel la sonde (70) est comprise, depuis laquelle la lumière primaire (32) est émise pour émettre la lumière primaire (32) sur ou dans l'échantillon (40, 94) à examiner et dans lequel la sonde (70) reçoit la lumière secondaire (44) pour amener la lumière secondaire (44) au moyen de l'optique (50) et du filtre optique (56) variable du système détecteur (58), et
dans lequel au moins l'optique (50), le filtre optique (56) et le système détecteur (58) et de préférence encore la source de lumière (30), un filtre de blocage (64) et/ou le système d'évaluation (62) sont intégrés dans la sonde (70).

8. Dispositif de spectromètre (1) selon la revendication 7,
dans lequel la sonde (70) présente un boîtier, lequel est adapté pour être utilisé dans des environnements protégés contre les explosions (lasers EX).

9. Dispositif de spectromètre (1) selon l'une quelconque des revendications précédentes,
dans lequel le miroir de lumière primaire (34) est un miroir à facettes (34a), et dans lequel la source de lumière (30) comprend plusieurs lasers (30a, 30b), lesquels sont adaptés pour être utilisés dans des environnements protégés contre les explosions (lasers EX),
et les rayons laser (32a, 32b) des plusieurs lasers EX sont injectés au moyen du miroir à facettes (34a) pour l'exposition de l'échantillon (40) à un rayonnement.

10. Procédé pour l'analyse spectrale d'un spectre de lumière secondaire, lequel est émis par un échantillon à examiner, avec un spectromètre selon l'une quelconque des revendications 1 - 9, comprenant les étapes :
a) de génération d'un rayon de lumière primaire (32) avec une longueur d'onde de lumière primaire,
b) d'irradiation du rayon de lumière primaire (32) sur ou dans un échantillon (40) à examiner,
c) de réception de la lumière secondaire (44) dans au moins un intervalle de longueur d'onde avec des longueurs d'onde, lesquelles sont supérieures et/ou inférieures à la longueur d'onde de lumière primaire,
d) de reproduction de la lumière secondaire (44) avec l'optique (50),
e) éventuellement de blocage de la longueur d'onde de lumière primaire au moyen d'un filtre de blocage (64),
f) de réglage du filtre optique (56) variable sur un premier intervalle de longueurs d'onde de lumière secondaire,
g) de mesure de l'intensité de la lumière secondaire (44) dans le premier intervalle de longueurs d'onde de lumière secondaire avec le système détecteur (58),
h) de réglage ensuite du filtre optique (56) variable sur un deuxième intervalle de longueurs d'onde de lumière secondaire différent du premier intervalle de longueurs d'onde de lumière secondaire,
i) de mesure de l'intensité de la lumière secondaire (44) dans le deuxième intervalle de longueurs d'onde de lumière secondaire avec le système détecteur (58),
j) d'évaluation des intensités de la lumière secondaire (44) dans le premier et le deuxième intervalle de longueurs d'onde de lumière secondaire.

11. Procédé selon la revendication 10,
dans lequel les étapes h) et i) sont mises en oeuvre dans une pluralité d'autres intervalles de longueurs d'onde de lumière secondaire à l'intérieur d'un intervalle de longueurs d'onde à examiner du spectre de lumière secondaire en ce que le filtre optique (56) variable est varié dans un intervalle de mesure dans le temps sur l'intervalle de longueurs d'onde à examiner du spectre de lumière secondaire,
pour générer un spectre de traçabilité de la lumière secondaire (44) sur un intervalle de longueurs d'onde à examiner.

12. Procédé selon l'une quelconque des revendications précédentes 10 ou 11,
dans lequel des échantillons (40) diffusants, en particulier opaques, sont examinés, lesquels génèrent une zone d'émission (43) spatialement étendue de la lumière secondaire (44), dont l'étendue est plus grande de manière transversale par rapport au rayon de lumière primaire (32) irradié que la surface de section transversale du rayon de lumière primaire (32) et dans lequel au moins une partie de la zone d'émission est reproduite par l'optique (50) sur le système détecteur (58)et la lumière secondaire (44) provenant de cette partie est détectée dans le même temps, dans lequel l'étendue est également plus grande de manière transversale par rapport au rayon de lumière primaire (32) irradié de ladite partie reproduite et détectée dans le même temps que la surface de section transversale du rayon de lumière primaire (32).

13. Procédé selon l'une quelconque des revendications précédentes 10 -12,
dans lequel la lumière secondaire (44) émise par l'échantillon (40) est parallélisée devant le filtre (56) variable.

14. Procédé selon l'une quelconque des revendications précédentes 10 -13,
dans lequel le procédé présente au moins une des caractéristiques suivantes :
a. le système détecteur (58) comprend au moins un détecteur (84, 84a, 84b) à résolution temporelle et la lumière primaire (32) est irradiée de manière pulsée sur ou dans l'échantillon (40) et la lumière secondaire (44) est détectée avec une résolution temporelle avec le détecteur à résolution temporelle et est évaluée de manière coïncidente avec l'impulsion de la lumière primaire (32),
b. le système détecteur (58) détecte sur chaque point de sa face de traçabilité à un moment donné les mêmes longueurs d'onde ou de manière simultanée plusieurs longueurs d'onde de la lumière secondaire (44),
c. différentes longueurs d'onde de la lumière secondaire (44) sont détectées à des heures différentes dans l'intervalle de longueurs d'onde à détecter de la lumière secondaire (44).

15. Utilisation du dispositif de spectromètre (1) selon l'une quelconque des revendications 1 - 9 ou du procédé selon l'une quelconque des revendications 10 - 14 pour au moins une des applications suivantes :
lors de l'observation de surface,
lors de l'examen de milieux en partie troubles ou de milieux avec de nombreuses transitions d'indice de réfraction, comme la neige,
dans le domaine biotechnologique, par exemple lors de fermentations,
lors de la mesure de poussières dans l'air ou de turbidités dans l'eau ou dans d'autres applications de la physique des particules ou à phase dispersée,
lors de la surveillance de réactions chimiques ou pharmaceutiques ou de réacteurs,
dans le secteur de la pétrochimie,
dans la technique de réaction, par exemple pour surveiller des processus de mélange ou des écoulements polyphasiques,
pour la détection et l'identification de produits explosifs et d'explosifs,
y compris de corps solides, de poudre, de milieux liquides, de produits gazeux, de gels,
pour la détection, la classification et la détermination de la composition de drogues et de médicaments,
dans les mines pour la détection, la classification et la détermination de la composition par exemple de roches phosphatées, par exemple de phosphorite, de guano, de roche de Nauru, de diatomite, de sels et d'esters de l'acide orthophosphorique (H3PO4) ou d'autres sels d'acides ou de gisements de sel arides terrestres (soude, borax, salpêtre) ou de gisements de boue de putréfaction, de sapropels (schistes bitumineux et roches mères de pétrole), gisements du circuit de soufre bactérien, de gisements marins d'élimination, par exemple gisements chimiques d'élimination (chaux, dolomite, roches sulfatées (mine à ciel ouvert, mine, fumeurs noirs), ou de gisements de biolithe,
pour la détection, la classification et la détermination de la composition de produits d'alimentation pour animaux,
pour la détection, la classification et la détermination de la composition d'engrais,
en tant qu'étapes de procédé dans le domaine pharmaceutique et chimique, par exemple lors de processus de cristallisation, de processus de mélange (matières solides et poudre), de procédés de séparation, par exemple distillation/rectification (surveillance de tête et de marécage), extractions, absorptions/adsorptions,
pour la surveillance du vieillissement d'électrolyte, par exemple pour des liquides/acides ioniques, des changements chimiques de systèmes de batterie et de piles à combustible ou de l'infiltration d'humidité et d'autres substances, comme le soufre, qui peuvent conduire à la contamination de la batterie ou de la pile à combustible,
pour l'examen de processus de durcissement de peintures et de colles,
pour l'observation/balayage de surface : UV/VIS, FL, Raman, MIR dans la microscopie, par exemple dans les techniques médicales, la technique de catalyseur, l'analytique de surfaces généralement, éventuellement au moyen de drones ou d'avions, par exemple pour la surveillance agraire,
dans des applications de la physique de corps solides,
pour la surveillance de réactions chimiques ou pharmaceutiques ou de réacteurs ;
dans la technique agro-alimentaire, par exemple pour la surveillance de la teneur en sucres, en eau et en matières grasses, en particulier également simultanément,
pour la mesure de poussières dans l'air ou de turbidités dans l'eau ou dans d'autres applications de la physique des particules ou à phase dispersée,
pour l'examen cutané, en particulier par voie cutanée, transcutanée, par exemple pour la détection de substances présentant des coefficients de diffusion élevés dans le corps, de chromophores, de l'hémoglobine ou des mélanines, respectivement dans une répartition non homogène, de marqueurs endogènes et exogènes, par exemple de fluorophores, de substances présentant une activité Raman et/ou d'absorbeurs, en particulier in vivo, in vitro ou ex vivo,
appliqué à des navires ou des sous-marins pour la détection de marées noires sur l'eau, par exemple pour l'identification de libération ou non d'hydrocarbures, comme de pétrole brut, d'essence, de diesel, d'essence minérale, de kérosène, ou pour démonter la présence d'introductions de produits chimiques sous l'eau, par exemple dans la mer, lorsque par exemple un sous-marin passe devant un tube d'introduction ou plonge, ou pour détecter des accumulations de matière plastiques, ou d'autres déchets dangereux dans la mer,
pour l'utilisation par les pompiers, par exemple de manière mobile ou sur un véhicule ou un bateau de pompiers, en particulier pour l'identification rapide de produits chimiques échappés,
dans la neutralisation de bombes, par exemple pour la détection d'explosifs ou la classification de gels inflammables ou explosifs, de matières solides ou de liquides éventuellement sur des véhicules, des véhicules sans équipage ou des drones, par exemple pour le déminage et l'identification de substances, y compris de substances ABC,
pour l'utilisation dans des points de mesure dans la zone protégée contre les explosions,
pour la spectroscopie Raman, à fluorescence et/ou à absorption, par exemple sur des substances à forte absorption, par exemple sur des matières plastiques totalement colorées ou des lasures, des peintures ou d'autres substances de traitement de surface, par exemple de la bakélite, qui détient sa couleur typiquement noire par ajout de particules de suie,
sur des autoclaves, par exemple pour suivre le processus de durcissement ou les résidus de solvant,
sur des matières composites à base de fibres de carbone dans l'industrie automobile et aéronautique,
lors la surveillance du processus de durcissement ou pour l'examen de la surface après des périodes de temps prescrites, par exemple pour des surfaces, qui sont exposées au rayonnement UV,
lors de l'examen de la teneur en humidité (NIR) de lignite/de charbon, de pétrole ou de schiste bitumineux,
lors de l'examen de la teneur en soufre de lignite/de charbon, de pétrole ou de schiste bitumineux au moyen d'une mesure Raman, par exemple avant la combustion dans la centrale au charbon ou directement dans les mines ou les mines à ciel ouvert ou pendant l'extraction de pétrole, par exemple pour déterminer la teneur en soufre et en eau, des longueurs de chaîne de carbone, du rapport de proportion eau/organique,
pour la réalisation concrète de chemins de transmission également dans des produits hautement absorbant, lesquels ne pourraient autrement n'être examinés qu'avec la technique ATR ou TIR,
lors de la surveillance des produits alimentaires, en particulier lors de la surveillance des fruits, des légumes, des viandes, pour examiner la peau, en particulier par voie cutanée, transcutanée,
pour la spectroscopie Raman et/ou à fluorescence en combinaison avec la spectroscopie à absorption, par exemple
sur des teintures et peintures, en particulier lorsque celles-ci sont mélangées à des particules de diffusion ou d'autres centres de diffusion provoqués, par exemple du TiO2 ou du carbonate de calcium,
lors de la surveillance de produits alimentaires, en particulier lors de la surveillance de fruits, légumes, de la viande,
dans l'analyse des roches ou la géologie,
pour des mesures dans des milieux à haute diffusion et en combinaison avec plusieurs techniques de mesure, en particulier pours des mesures d'émission de fluorescence, qui sont directement influencées par la matrice d'échantillon, pour la mesure
de processus d'absorption sur le trajet de génération et d'émission,
de processus de diffusion sur le trajet de génération et d'émission,
de superpositions par d'autres fluorophores, par exemple par génération de longueurs d'onde multiples au moyen d'un deuxième AOTF sur le côté de génération, plusieurs longueurs d'onde de génération pouvant ce faisant être écrites au moyen de DEL à flash,
pour la mesure de la diffusion Raman, laquelle est directement influencée par la matrice d'échantillon,
pour la mesure de processus d'absorption sur le trajet de génération et de détection,
pour la mesure de processus de diffusion sur le trajet de génération et de détection,
en combinaison avec une génération de deux longueurs d'onde pour déduire mathématiquement le base de fluorescence,
pour la détermination de taux de lactate, de taux d'urée, de valeurs de la fonction rénale, de taux de tumeur, de taux de collagène, de la teneur en humidité ou pour le diagnostic de lésions pigmentaires ou de cancers de la peau.
